# EUROPÄISCHE PATENTSCHRIFT

(11) **EP 2 736 832 B1**
(45) Veröffentlichungstag und Bekanntmachung des Hinweises auf die Patenterteilung: **06.04.2016**
(21) Anmeldenummer: 12743073.4
(22) Anmeldetag: 17.07.2012
(51) Int. Cl.: B66F 9/07, B66F 9/24, B60T 8/28, B60T 8/17, B60T 8/175, B60T 7/12

(54) **VERFAHREN ZUM STEUERN DER LÄNGSBEWEGUNG EINES SCHIENENGEBUNDENEN FAHRZEUGS, KURVENFAHRTSTEUERUNGSVORRICHTUNG UND SCHIENENGEBUNDENES FAHRZEUG**
METHOD FOR CONTROLLING THE LONGITUDINAL MOVEMENT OF A RAIL-BOUND VEHICLE, CURVE TRAVEL CONTROL DEVICE AND RAIL-BOUND VEHICLE
PROCÉDÉ DE COMMANDE DU MOUVEMENT LONGITUDINAL D'UN VÉHICULE FERROVIAIRE, DISPOSITIF DE COMMANDE EN VIRAGE, ET VÉHICULE FERROVIAIRE

(30) Priorität: 27.07.2011 DE 102011108580
(43) Veröffentlichungstag der Anmeldung: 04.06.2014
(73) Patentinhaber: Sew-Eurodrive GmbH & Co. KG, 76646 Bruchsal (DE)
(72) Erfinder: HUTZL, Albert, 76698 Ubstadt-Weiher (DE)
(86) Internationale Anmeldenummer: PCT/EP2012/003002
(87) Internationale Veröffentlichungsnummer: WO 2013/013787

(56) Entgegenhaltungen:
- EP-A2- 0 997 430
- US-A1- 2005 203 699
- US-A1- 2007 253 800
- Anonymous: "Antriebsschlupfregelung - Wikipedia", , 23 June 2011 (2011-06-23), XP055154654, Retrieved from the Internet: URL:http://de.wikipedia.org/w/index.php?ti tle=Antriebsschlupfregelung&oldid=90400565 [retrieved on 2014-11-24]

## Beschreibung

Die Erfindung betrifft ein Verfahren zum Steuern der Längsbewegung eines schienengebundenen Regalbediengerät gemäß dem Oberbegriff des Anspruchs 1, eine Kurvenfahrtsteuerungseinrichtung gemäß dem Oberbegriff des Anspruchs 8 und ein schienengebundenes Regalbediengerät gemäß dem Oberbegriff des Anspruchs 14. Diese sind bekannt z.B. aus US 2005/203699 A1.

Bei schienengebundenen Regalbediengeräte mit zwei an einer gemeinsame Schiene in Fahrtrichtung beabstandet zueinander geführten Antriebsrädern besteht das bekannte Problem, dass beim Durchlaufen einer durch die Schiene beschriebenen Kurve an einem Antriebsrad starke Änderungen der Geschwindigkeit auftreten, wenn das andere Antriebsrad auf einer konstanten Geschwindigkeit gehalten wird. Diese heftigen Geschwindigkeitsänderungen bewirken Erschütterungen in dem Fahrzeug, die zur Zerstörung oder Beschädigung des Fahrzeuges führen können.

Aus der DE 10 2006 048 437 A1 ist ein kurvenschnell fahrendes Regalfahrzeug bekannt, bei welchem je ein Drehmoment-Sollwert für jedes Antriebsrad berechnet wird, wobei die berechneten Drehmoment-Sollwerte jeweils mit einem vorgegeben Einflussfaktor multipliziert werden, wobei die Einflussfaktoren mit einer Rampe zwischen 200% und 0% verändert werden. Außerhalb eines Übergangsbereiches läuft das langsamer laufende Antriebsrad frei mit.

Aus US 2005/0203699 A1 ist ein System bewegter Körper bekannt, bei welchem ein Vorgabewert für ein Drehmoment-Aufteilungsverhältnis zwischen einer Vorderachse und einer Hinterachse eines Fahrzeugs bei Beschleunigung auf 4 zu 6, bei Abbremsung auf 6 zu 4 und bei gleichförmiger Fahrt auf 5 zu 5 gestellt wird.

Aus Anonymous: "Antriebsschlupfregelung - Wikipedia", 23. Juni 2011, URL:http:/de.wikipedia.org/w/index.php?title=Antriebsschlupfregelung&oldid=90400565, ist sind Antriebsschlupfregelungen bekannt, bei welchen in Abhängigkeit von einem momentanen Kraftschlussbeiwert das zugehörige Rad gebremst und/oder der zugehörige Verbrennungsmotor leistungsreduziert wird.

Der Erfindung liegt die Aufgabe zugrunde, ein Verfahren zum Steuern der Längsbewegung eines schienengebundenen Regalbediengerätes anzugeben, durch welches die Belastungen des Fahrzeugs im Betrieb vermindert werden können.

Erfindungsgemäß wird die Aufgabe bei dem Verfahren mit den in Anspruch 1 angegebenen Merkmalen, bei der Kurvenfahrsteuerungseinrichtung mit den in Anspruch 8 angegebenen Merkmalen und bei dem schienengebundenen Regalbediengerät mit den in Anspruch 14 angegebenen Merkmalen gelöst.

Als Anwendung der Erfindung ist bei einem Verfahren zum Steuern der Längsbewegung eines schienengebundenen Regalbediengerätes, wobei das Fahrzeug durch wenigstens zwei an einer gemeinsamen Schiene in Fahrtrichtung beabstandet zueinander geführte Antriebsräder angetrieben wird und wobei für jedes der wenigstens zwei Antriebsräder jeweils ein Drehmoment-Sollwert ermittelt wird, vorgesehen, dass bei einer Durchfahrt einer Schienenkurve die wenigstens zwei Antriebsräder derart eingesteuert werden, dass eine plötzliche Drehzahländerung am schneller laufenden Antriebsrad vermieden wird. Die Erfindung nutzt somit die neue Erkenntnis, dass die plötzlichen Drehzahländerungen am schneller laufenden Antriebsrad diejenigen sind, welche die unerwünschten Schädigungen des Fahrzeugs hervorrufen, während die plötzliche Drehzahländerungen am langsamer laufenden Antriebsrad im Allgemeinen oder häufig unschädlich sind, da sie in Bewegungsphasen stattfinden, in denen das langsamer laufende Antriebsrad im Wesentlichen oder zumindest beinahe stillsteht. Die Erfindung gibt somit ein einfach regelungstechnisch umsetzbares Verfahren an, mit welchem schädliche Einflüsse auf das Fahrzeug verminderbar sind, so dass die Standzeit des Fahrzeugs im Betrieb insgesamt erhöhbar ist.

Zur Lösung der Aufgabe ist bei der Erfindung bei einem Verfahren der eingangs beschriebenen Art vorgesehen, dass ein Antriebsrad der wenigstens zwei Antriebsräder als momentan langsamer laufendes Antriebsrad erkannt wird und dass für das als momentan langsamer laufend erkannte Antriebsrad zusätzlich ein variabler Drehmoment-Grenzwert eingestellt wird, welcher den ermittelbaren Drehmoment-Sollwert für dieses Antriebsrad nach oben begrenzt. Durch die Begrenzung kann erreicht werden, dass das Drehmoment am als langsamer laufend erkannten Antriebsrad den Drehmoment-Grenzwert zumindest im Rahmen einer Regelgüte oder Regelgenauigkeit nicht übersteigt. Von Vorteil ist dabei, dass ein Regelkreis mit kurzen Reaktionszeiten bereitstellbar ist, bei welchem beispielsweise die Einschwingzeit sehr kurz ist. Dies wird dadurch erreicht, dass erfindungsgemäß nicht von einer zentralen Steuerung ein Drehmoment-Sollwert für das langsamer laufende Antriebsrad ermittelt und vorgegeben wird, sondern dass die Ermittlung dieses Drehmoment-Sollwerts dem lokalen Regelkreis dieses Antriebsrades überlassen bleibt. Die plötzliche Drehzahländerung, die bei einer ungeregelten Einfahrt in eine Schienenkurve am schneller laufenden Antriebsrad auftritt, wird bei der Ausgestaltung dadurch effektiv verhindert, dass ein variabler Drehmoment-Grenzwert eingestellt wird, welcher den lokal am Antriebsrad ermittelten Drehmoment-Sollwert begrenzt. Somit ist wirkungsvoll vermeidbar, dass das langsamer laufende Antriebsrad das schneller laufende Antriebsrad an dem kritischen Punkt des Bewegungsablaufes zu stark schiebt.

Die Erfindung hat gegenüber der DE 10 2006 048 437 A1 den Vorteil, dass beide Antriebsräder bei der gesamten Kurvendurchfahrt zum Antrieb beitragen können. Das erforderliche Drehmoment kann somit auf beide Antriebsräder verteilt werden, so dass die zugehörigen Motoren kleiner dimensioniert werden können.

Bei einer Ausgestaltung der Erfindung kann vorgesehen sein, dass durch den eingestellten Drehmoment-Grenzwert ein Drehmoment-Bereich für den Drehmoment-Sollwert zwischen Null und dem Drehmoment-Grenzwert definiert wird. Von Vorteil ist dabei, dass der Drehmoment-Sollwert an dem als langsamer laufend erkannten Antriebsrad nicht durch eine zentrale Instanz vorgegeben werden muss, sondern dezentral für das Antriebsrad ermittelt werden kann. Somit sind die Regelungseigenschaften der Drehmomentregelung verbesserbar.

Bei einer Ausgestaltung der Erfindung kann vorgesehen sein, dass durch den eingestellten Drehmoment-Grenzwert Abweichungen des Drehmoment-Sollwerts vom Drehmoment-Grenzwert nach unten zugelassen werden. Somit ist eine flexible Regelung des entwickelten Drehmoments am als langsamer laufend erkannten Antriebsrad ausbildbar. Abweichungen des entwickelten Drehmoments im Bereich zwischen Null und dem Drehmoment-Grenzwert sind somit erreichbar, wenn dies die Regelung erfordert. Es ist somit eine flexible Kopplung zwischen den Antriebsrädern durch die einseitige Begrenzung auf Drehmoment-Werte, die kleiner als der Drehmoment-Grenzwert sind, erreichbar.

Bei einer Ausgestaltung der Erfindung kann vorgesehen sein, dass an dem als momentan langsamer laufend erkannten Antriebsrad der für dieses Antriebsrad ermittelte Drehmoment-Sollwert vorgegeben wird, wenn dieser Drehmoment-Sollwert den eingestellten Drehmoment-Grenzwert unterschreitet, und dass an dem als momentan langsamer laufend erkannten Antriebsrad der für dieses Antriebsrad eingestellte Drehmoment-Grenzwert vorgegeben wird, wenn der ermittelte Drehmoment-Sollwert den Drehmoment-Grenzwert überschreitet. Von Vorteil ist dabei, dass ein einfaches Verfahren angegeben wird, wie eine plötzliche Drehzahländerung am schneller laufenden Antriebsrad vermieden werden kann, indem das langsamer laufende Antriebsrad gehindert wird, das zur Erreichung des angestrebten zur Erreichung des angestrebten Drehzahl-Sollwert erforderliche Drehmoment zu entwickeln. Die kritische Spitze im Drehzahl-Zeit-Diagramm des schneller laufenden Antriebsrads wird auf diese Weise wirkungsvoll abgerundet oder geglättet oder sogar eingeebnet.

Bei einer Ausgestaltung der Erfindung kann vorgesehen sein, dass der Drehmoment-Grenzwert für das als momentan langsamer laufend erkannte Antriebsrad in Abhängigkeit von dem ermittelten Drehmoment-Sollwert des anderen Antriebsrads, insbesondere des als momentan schneller laufend erkannte Antriebsrads, der wenigstens zwei Antriebsräder eingestellt wird. Insbesondere kann der Drehmoment-Grenzwert gleich dem ermittelten Drehmoment-Sollwert des anderen Antriebsrads eingestellt werden, was besonders einfach ist. Von Vorteil ist dabei, dass in dem erfindungsgemäßen Verfahren eine einfache Berechnungsregel zur Ermittlung des anzuwendenden Drehmoment-Grenzwerts bereitstellbar ist.

Bei einer Ausgestaltung der Erfindung kann vorgesehen sein, dass für beide Antriebsräder jeweils derjenige Drehmoment-Sollwert vorzugsweise unabhängig voneinander und/oder separat ermittelt wird, der zur Erreichung eines Drehzahl-Sollwerts erforderlich ist. Hierbei kann vorgesehen sein, dass der ermittelte Drehmoment-Sollwert an dem langsameren Antriebsrad durch den eingestellten Drehmoment-Grenzwert ersetzt wird, wenn für das langsamere Antriebsrad der Drehmoment-Sollwert über dem Drehmoment-Grenzwert liegt. Besonders günstig ist es hierbei, wenn die Drehmoment-Sollwerte für die Antriebsräder in voneinander unabhängigen oder in separaten Regelkreisen ermittelt, beispielsweise berechnet, werden. Von Vorteil ist dabei, dass eine flexible Kopplung der Antriebsräder einrichtbar ist, da das langsamere Antriebsrad häufig bestrebt sein wird, schneller als durch den Drehmoment-Grenzwert vorgegeben zu fahren. Dies hat zu Folge, dass das langsamere Antriebsrad in der Regel mit dem Drehmoment-Grenzwert fahren wird. Diese Kopplung ist aber nicht starr, da das langsamere Antriebsrad von dem Drehmoment-Grenzwert nach unten abweichen kann. So kann beispielsweise ein Aufschaukeln der Regelkreise vermieden oder gedämpft werden.

Bei einer Ausgestaltung der Erfindung kann vorgesehen sein, dass zur Erkennung des momentan langsamer laufenden Antriebsrads für jedes der wenigstens zwei Antriebsräder jeweils ein Drehzahl-Istwert gemessen wird. Von Vorteil ist dabei, dass einfach zu verarbeitende Größen zur Erkennung des momentan langsamer laufenden Antriebsrads bereitstellbar sind. Die Messung der Drehzahl-Istwerte ist vorzugsweise mit Drehzahl-Gebern durchführbar, welche an jedem Antriebsrad angeordnet und/oder mit je einem Antriebsrad gekoppelt sind.

Alternativ kann vorgesehen sein, dass zur Erkennung des momentan langsamer laufenden Antriebsrades eine andere Größe, beispielsweise ein Stellwinkel zwischen der Laufrichtung wenigstens eines Antriebsrades und der Verbindungslinie zwischen den Auflagepunkten oder Achsen der Antriebsräder oder eine elektrische Messgröße von Antriebsmotoren der Antriebsräder, gemessen wird.

Bei einer Ausgestaltung der Erfindung kann vorgesehen sein, dass zur Ermittlung des als momentan langsamer laufend erkannten Antriebsrades ein Quotient der Drehzahl-Istwerte der Antriebsräder gebildet wird. Von Vorteil ist dabei, dass eine einfache Rechengröße bereitstellbar ist, mit welcher das momentan langsamer laufende Antriebsrad erkennbar ist. Durch die Quotientenbildung ist eine Abhängigkeit von dem Absolutwert der verarbeiteten Drehzahl-Istwerte eliminierbar. Hierbei kann vorgesehen sein, dass ein Schwellwert, beispielsweise ein Wert von 1 oder ein Wert größer als 1, beispielsweise 1,05, vorgegeben wird, für welche bei Überschreitung des Schwellwertes dasjenige Antriebsrad als momentan langsamer laufendes Antriebsrad erkennbar ist, welches seinen Drehzahl-Istwert im Nenner beisteuert. Ebenso ist derselbe oder ein weiterer Schwellwert, beispielsweise ein Schwellwert kleiner als 1, beispielsweise 0,95, verwendbar, um bei einer Unterschreitung dieses Schwellwerts durch den Quotienten das momentan langsamer laufende Antriebsrad als dasjenige Antriebsrad zu erkennen, welches in dem Quotienten den Zähler als Drehzahl-Istwert beisteuert.

Bei einer Ausgestaltung der Erfindung kann vorgesehen sein, dass zur Erkennung des momentan langsamer laufenden Antriebsrads die Laufrichtung wenigstens eines Antriebsrades erfasst wird. Von Vorteil ist dabei, dass kurzzeitig auftretende Messfehler im Wege einer Plausibilitätsprüfung ignorierbar sind, da die zu vermeidenden plötzlichen Geschwindigkeitsänderungen am schneller laufenden Antriebsrad bei Einfahrt in eine Kurve an dem vorausfahrenden Antriebsrad, bei Ausfahrt aus der Kurve an dem nachlaufenden Antriebsrad auftreten sollten.

Bei einer Ausgestaltung der Erfindung kann vorgesehen sein, dass ein Antriebsrad als langsamer laufendes Antriebsrad erkannt wird, wenn die betragsmäßige Differenz der Drehzahl-Istwerte der Antriebsräder einen vorgegebenen Schwellwert erreicht oder überschreitet. Von Vorteil ist dabei, dass auf diese Weise ein unnötig häufiges Ansprechen des erfindungsgemäßen Regelkreises bei Geradesausfahrt, bei welcher die Antriebsräder nahezu oder exakt denselben Drehzahl-Istwert aufweisen, vermeidbar ist. Auf diese Weise ist ein Hystereseverhalten im erfindungsgemäßen Regelkreis bereitstellbar, mit welchem ein Aufschaukeln des Regelkreises sicher vermeidbar ist.

Bei einer Ausgestaltung der Erfindung kann vorgesehen sein, dass der Schwellwert eine relative Differenz, also eine auf einen Absolutwert bezogene Differenz, von wenigstens 5%, insbesondere höchstens 10%, der Drehzahl-Istwerte beschreibt. Versuche haben ergeben, dass zur Vermeidung eines übermäßigen Ansprechens des Regelkreises bei Geradeausfahrt eine Hysterese von 5% vorteilhaft ist. Versuche haben ebenfalls ergeben, dass eine Hysterese von über 10% unvorteilhafte Eigenschaften des erfindungsgemäßen Regelungsverfahrens bei der Kurvendurchfahrt zeigen kann, da die Regelung zu spät anspricht, wenn nicht anderweitig Gegenmaßnahmen oder Vorkehrungen getroffen werden.

Bei einer Ausgestaltung der Erfindung kann vorgesehen sein, dass die Hysterese beim Umschalten der Einstellung eines variablen Drehmoment-Grenzwertes zwischen den Antriebsrädern dadurch eingerichtet wird bzw. ist, dass ein Korridor für den Quotienten der Drehzahl-Istwerte vorgegeben wird, oberhalb dessen und unterhalb dessen ein Umschalten der Einstellung des Drehmoments-Grenzwertes zwischen den Antriebsrädern durchgeführt wird.

Bei einer Ausgestaltung der Erfindung kann vorgesehen sein, dass eine erste Bedingung für die Drehzahl-Istwerte der Antriebsräder hinterlegt ist, und dass die Erkennung eines langsameren Antriebsrades freigeschaltet wird, wenn die erste Bedingung erfüllt ist. Eine solche Bedingung kann beispielsweise einen Quotienten aus dem Drehzahl-Istwert eines der Antriebsräder und dem Drehzahl-Istwert des anderen der Antriebsräder auswerten. Beispielsweise kann die Bedingung prüfen, ob der Quotient aus dem Drehzahl-Istwert des momentan als langsamer erkannten Antriebsrades im Zähler und dem Drehzahl-Istwert des momentan als schneller erkannten Antriebsrades einen vorgegebenen ersten Schwellwert erreicht oder unterschreitet. Dieser erste Schwellwert kann beispielsweise bei 0,8 oder bei einem anderen Wert zwischen 0 und 1 liegen. Die Bedingung kann das Erreichen oder Unterschreiten direkt oder durch Vergleich der Kehrwerte oder auf andere Weise, beispielsweise durch eine mathematische Umstellung oder Transformation, prüfen. Somit ist ein Hystereseverhalten des Umschaltens zwischen den Antriebsrädern erreichbar.

Alternativ oder zusätzlich kann bei einer Ausgestaltung vorgesehen sein, dass eine zweite Bedingung für die Drehzahl-Istwerte der Antriebsräder hinterlegt ist, und dass ein langsameres Antriebsrades erkannt wird, wenn die zweite Bedingung erfüllt ist. Beispielsweise kann die Bedingung prüfen, ob der Quotient aus dem Drehzahl-Istwert des momentan als langsamer erkannten Antriebsrades im Zähler und dem Drehzahl-Istwert des momentan als schneller erkannten Antriebsrades einen vorgegebenen zweiten Schwellwert erreicht oder überschreitet. Dieser zweite Schwellwert kann beispielsweise bei 0,9 oder bei einem anderen Wert zwischen Null oder dem ersten Schwellwert einerseits und 1,5 andererseits, vorzugsweise zwischen Null oder dem ersten Schwellwert einerseits und 1,1 andererseits oder sogar zwischen Null oder dem ersten Schwellwert einerseits und 1 andererseits, liegen. Die Bedingung kann das Erreichen oder Unterschreiten direkt oder durch Vergleich der Kehrwerte oder auf andere Weise, beispielsweise durch eine mathematische Umstellung oder Transformation, prüfen. Somit ist ein rechtzeitiges Umschalten zwischen den Antriebsrädern erreichbar.

Die genannten Zahlenwerte zeigen, dass nicht zu jedem Zeitpunkt das als langsamer laufend erkannte Antriebsrad auch tatsächlich langsamer läuft. Es kann zu Vermeidung von zu häufigen Umschaltvorgängen günstig sein, das Umschalten durch eine Hysterese oder dergleichen hinauszuzögern, bis ein Wechsel der Funktion des langsamer laufenden Antriebsrades zwischen den Antriebsrädern sicher oder eindeutig erkennbar ist.

Bei einer Ausgestaltung der Erfindung kann vorgesehen sein, dass der Drehmoment-Grenzwert an dem als momentan langsamer laufend erkannten Antriebsrad auf Null eingestellt wird, wenn der Drehmoment-Sollwert an dem anderen Antriebsrad, insbesondere an dem als momentan schneller laufend erkannten Antriebsrad, der wenigstens zwei Antriebsrädern ein Brems-Drehmoment, also ein negatives Drehmoment in Bezug auf den Drehsinn des Drehzahl-Istwertes, beschreibt. Von Vorteil ist dabei, dass auf diese Weise einfach erreichbar ist, dass ein zu bremsendes Antriebsrad durch das andere Antriebsrad geschoben wird. Es ist somit erreichbar, dass das einem Bremsvorgang entgegenarbeitende Antriebsrad freigebbar ist und während des Bremsvorgangs frei mitläuft.

Bei einer Ausgestaltung der Erfindung kann vorgesehen sein, dass den Antriebsrädern ein Drehzahl-Sollwert vorgegeben wird und dass für jedes Antriebsrad, vorzugsweise in einem insbesondere dem einzelnen Antriebsrad zugeordneten Regelkreis einer Regeleinrichtung, derjenige Drehmoment-Sollwert ermittelt wird, welcher zur Erreichung des vorgegebenen Drehzahl-Sollwertes erforderlich ist. Von Vorteil ist dabei, dass für jedes Antriebsrad ein schnell ansprechender Regelkreis bereitstellbar ist, welcher zu seinem Ablauf nicht auf komplexe Berechnungsergebnisse von dem anderen Antriebsrad oder von einer übergeordneten Steuerung angewiesen ist. Die Erfindung vermeidet gerade diese zeitverzögernde komplexe Berechnung, indem für die Antriebsräder an deren Regelkreisen bei Bedarf lediglich Drehmoment-Grenzwerte eingestellt werden.

Bei einer Ausgestaltung der Erfindung kann vorgesehen sein, dass beiden Antriebsrädern derselbe Drehzahl-Sollwert vorgegeben ist. Von Vorteil ist dabei, dass komplizierte Rechenverfahren, welche den exakten zeitlichen Verlauf einer optimalen Drehzahl für die beiden Antriebsräder für eine gegebene Schienenkurvenkrümmung berechnen, vermeidbar sind. Das erfindungsgemäße Verfahren ist daher für die Durchfahrt beliebiger Schienenkurven verwendbar, ohne dass Informationen über die Geometrie der Schienenkurve, beispielsweise über einen Krümmungsradius oder eine Länge der Schienenkurve, vorliegen müssen. Vielmehr ist eine starre mechanische Kopplung zwischen den Antriebsrädern nutzbar, um eine gleichmäßige Kurvendurchfahrt zu erreichen.

Bei einer Ausgestaltung der Erfindung kann vorgesehen sein, dass der Drehmoment-Grenzwert für das als momentan schneller laufend erkannte Antriebsrad auf einen vorgegebenen, konstanten Maximalwert eingestellt wird. Von Vorteil ist dabei, dass der Regelkreis an dem momentan schneller laufenden Antriebsrad unbegrenzt betreibbar ist.

Bei einer Ausgestaltung der Erfindung kann vorgesehen sein, dass die Drehmoment-Sollwerte für die Antriebsräder voneinander unabhängig bestimmt werden. Von Vorteil ist dabei, dass die Regelkreise zur Ermittlung der Drehmoment-Sollwerte zu Drehzahl-Istwerten voneinander separat ausbildbar sind.

Bei einer Ausgestaltung der Erfindung kann vorgesehen sein, dass der der Drehmoment-Grenzwert am momentan als langsamer laufend erkannten Antriebsrad von Null verschieden vorgegeben wird, solange der Drehmoment-Sollwert am momentan als schneller laufend erkannten Antriebsrad größer als Null ist. Von Vorteil ist dabei, dass das ein Teil des benötigten Drehmoments immer an dem langsameren Antriebsrad entwickelbar ist. Somit sind die Motoren der Antriebsräder gut ausnutzbar. Ein ungenutztes Leerlaufen eines Motors ist vermeidbar.

Bei einer Ausgestaltung der Erfindung kann vorgesehen sein, dass der Drehmoment-Grenzwert am momentan als langsamer laufend erkannten Antriebsrad mit dem Drehmoment-Sollwert am momentan als schneller laufend erkannten Antriebsrad gekoppelt, insbesondere in einem festen Zahlenverhältnis oder einer festen Differenz gekoppelt, eingestellt wird. Somit ist eine einfach implementierbare Vorschrift zur Aufteilung des insgesamt benötigten Drehmoments auf die Antriebsräder erreichbar. Eine übergeordnete Steuerung ist verzichtbar. Hierdurch ist die Zeitkonstante des gesamten Regelkreises verkürzbar. Das Ansprechverhalten ist so verbesserbar.

Die Erfindung bietet insgesamt den Vorteil, dass während einer Kurvendurchfahrt immer an beiden Antriebsrädern ein von Null verschiedenes Drehmoment entwickelt wird, zumindest solange kein Antriebsrad abgebremst wird.

Bei einer Ausgestaltung der Erfindung kann vorgesehen sein, dass als Drehmoment-Grenzwert am momentan als langsamer laufend erkannten Antriebsrad der Drehmoment-Sollwert am momentan als schneller laufend erkannten Antriebsrad eingestellt oder vorgegeben wird. Von Vorteil ist dabei, dass eine gleichmäßige Aufteilung des benötigen Drehmoments auf die Antriebsräder erreichbar ist.

Somit ist ohne feste Kopplung der Regelkreise der Antriebsräder erreichbar, dass das schneller laufende Antriebsrad das langsamere Antriebsrad mitsteuert. Die resultierende Kurvenfahrtsteuerungseinrichtung ist wesentlich flexibler gestaltbar. Ein Schwingungsaufbau aufgrund von Trägheiten der Steuerung ist vermeidbar.

Bei einer Ausgestaltung der Erfindung von möglicherweise eigenständiger Bedeutung kann vorgesehen sein, dass zu Beginn einer Kurvendurchfahrt ein Drehzahl-Sollwert abgesenkt wird und dass der Drehzahl-Sollwert am als schneller laufend erkannten Antriebsrad während der Kurvendurchfahrt konstant gehalten wird. Es hat sich herausgestellt, dass auch in diesem einfach realisierbaren Fall mit der erfindungsgemäßen Ansteuerung der Antriebsräder gefährliche Belastungen vermeidbar sind. Komplexe Berechnungen sind verzichtbar.

Zur Lösung der genannten Aufgabe ist bei einer Kurvenfahrtsteuerungsvorrichtung mit wenigstens zwei Regeleinrichtungen, welche jeweils zur Ermittlung eines Drehmoment-Sollwertes für je ein Antriebsrad von wenigstens zwei hintereinander an einer gemeinsamen Schiene geführten Antriebsrädern eines schienengebundenen Regalbediengerätes, eingerichtet sind, vorgesehen, dass eine Prüfeinrichtung ausgebildet ist, mit welcher ein Antriebsrad der wenigstens zwei Antriebsräder als momentan langsamer laufendes Antriebsrad erkennbar ist, dass jeder Regeleinrichtung eine Begrenzungseinrichtung zur Einstellung eines variablen nach oben begrenzenden Drehmoment-Grenzwertes für die ermittelbaren Drehmoment-Sollwerte zugeordnet ist und dass die Prüfeinrichtung mit den Begrenzungseinrichtungen der wenigstens zwei Antriebsräder derart in Ansteuerungsverbindung steht, dass jeweils die Begrenzungseinrichtung des von der Prüfeinrichtung als momentan langsamer laufend erkannten Antriebsrades aktiviert ist. Von Vorteil ist dabei, dass ein Mittel bereitgestellt ist, mit welchem ein schienengebundenes Fahrzeug zur Durchführung des erfindungsgemäßen Verfahrens nachrüstbar ist. Durch die Aktivierung ist ein Drehmoment-Grenzwert variabel, d.h. auf einen beliebigen geeigneten Wert, einstellbar. Die Einrichtung eines Drehmoment-Grenzwertes hat den Vorteil, dass das entwickelbare Drehmoment an dem jeweiligen Antriebsrad in einem Berweich einstellbar ist, der einseitig durch den Drehmoment-Grenzwert nach oben, also in Richtung zunehmender Drehmomente, begrenzt oder beschränkt ist.

Hierbei kann vorgesehen sein, dass die wenigstens zwei Regeleinrichtungen separat voneinander ausgebildet sind. Von Vorteil ist dabei, dass schnelle, voneinander unabhängige Regelkreise einrichtbar sind. Somit sind kurze Zeitkonstanten der Regeleinrichtungen realisierbar. Die wechselseitige Beeinflussung der Regeleinrichtungen erfolgt bevorzugt nur durch eine erfindungsgemäße Vorgabe eines Drehmoment-Grenzwerts. Die Berechnung des Drehmoment-Sollwerts in jeder Regeleinrichtung erfolgt somit autark und insbesondere unabhängig von der jeweils anderen Regeleinrichtung, wobei ein jeweils eingestellter Drehmoment-Grenzwert als obere Grenze, welche der Drehmoment-Sollwert nicht übersteigen darf, beachtet wird.

Bei einer Ausgestaltung der Erfindung kann vorgesehen sein, dass die jeweils aktivierte Begrenzungseinrichtung so eingerichtet ist, dass durch den eingestellten Drehmoment-Grenzwert ein Drehmoment-Bereich für den Drehmoment-Sollwert zwischen Null und dem Drehmoment-Grenzwert definiert ist. Von Vorteil ist dabei, dass der Drehmoment-Sollwert an dem Antriebsrad innerhalb des Bereichs unabhängig von einer zentralen Regelinstanz festlegbar ist.

Bei einer Ausgestaltung der Erfindung kann vorgesehen sein, dass die jeweils aktivierte Begrenzungseinrichtung so eingerichtet ist, dass Abweichungen des Drehmoment-Sollwerts vom eingestellten Drehmoment-Grenzwert nach unten zugelassen sind. Eine freie Einstellung des Dehmoment-Sollwerts innerhalb des durch den Drehmoment-Grenzwert definierten Bereichs ist somit flexibel nach den Anforderungen der momentanen Situation ausführbar. Abweichungen des Drehmoment-Sollwerts von dem eingestellten Drehmoment-Grenzwert zu kleineren Drehmomenten sind somit bei Bedarf möglich.

Bei einer Ausgestaltung der Erfindung kann vorgesehen sein, dass die jeweils aktivierte Begrenzungseinrichtung mit der Regeleinrichtung des anderen Antriebsrades in Steuerverbindung zur Einstellung des Drehmoment-Grenzwertes steht. Von Vorteil ist dabei, dass eine übergeordnete Steuerung verzichtbar ist. Es ist somit erreichbar, dass die Regeleinrichtung des momentan schneller laufenden Antriebsrades den Drehmoment-Grenzwert für das als momentan langsamer laufend erkannte Antriebsrad einstellt oder vorgibt.

Bei einer Ausgestaltung der Erfindung kann vorgesehen sein, dass die Regeleinrichtungen jeweils zur Ermittlung des Drehmoment-Sollwertes für einen Drehzahl-Sollwert eingerichtet sind. Von Vorteil ist dabei, dass bekannte Verfahren zur Ansteuerung der Antriebsräder verwendbar sind.

Bei einer Ausgestaltung der Erfindung kann vorgesehen sein, dass die Regeleinrichtungen unabhängig voneinander betreibbar sind. Von Vorteil ist dabei, dass die Regelkreise der Regeleinrichtungen, durch welche jeweils die Drehmoment-Sollwerte ermittelt werden, unabhängig von einer zentralen Steuerung und ohne Kopplung zwischen den Regelkreisen betreibbar sind. Dies erhöht die Schnelligkeit der Regelkreise.

Bei einer Ausgestaltung der Erfindung kann vorgesehen sein, dass die Prüfeinrichtung an ein Messmittel zur Messung von Ist-Drehzahlen der wenigstens zwei Antriebsräder angeschlossen oder anschließbar ist. Von Vorteil ist dabei, dass in der Prüfeinrichtung Informationen verarbeitbar sind, die unmittelbar Aufschluss darüber geben, welches Antriebsrad momentan langsamer läuft.

Bei einer Ausgestaltung der Erfindung kann vorgesehen sein, dass die Prüfeinrichtung ein Mittel zur Differenzbildung oder einen Komparator von Ist-Drehzahlen aufweist. Von Vorteil ist dabei, dass das langsamer laufende Antriebsrad anhand des Vorzeichens der Differenz erkennbar ist.

Bei einer Ausgestaltung der Erfindung kann vorgesehen sein, dass die Prüfeinrichtung ein Mittel zur Quotientenbildung von Ist-Drehzahlen aufweist. Von Vorteil ist dabei, dass eine Erkennung des momentan langsamer laufenden Antriebsrades unabhängig von dem Absolutwert der Drehzahl-Istwerte ausführbar ist.

Bei einer Ausgestaltung der Erfindung kann vorgesehen sein, dass die Prüfeinrichtung einen Schwellwertschalter aufweist. Von Vorteil ist dabei, dass ein Hystereseverhalten einrichtbar ist.

Bei einer Ausgestaltung der Erfindung kann vorgesehen sein, dass die Prüfeinrichtung einen Umschalter aufweist oder an wenigstens einen Umschalter angeschlossen ist, mit welchem die Begrenzungseinrichtungen der wenigstens zwei Antriebsräder wechselseitig aktivierbar sind. Von Vorteil ist dabei, dass ein einfach realisierbares, robustes Mittel bereitstellbar ist, mit welchem eine Aktivierung der jeweiligen Aktivierung der jeweiligen Begrenzungseinrichtungen ausführbar ist.

Bei einer Ausgestaltung der Erfindung kann vorgesehen sein, dass eine erste Bedingung für die Drehzahl-Istwerte der Antriebsräder hinterlegt ist, und dass der Umschalter freigeschaltet oder aktiviert ist, wenn die erste Bedingung erfüllt ist. Von Vorteil ist dabei, dass ein fehlerhaftes und/oder unnötig häufiges Umschalten zwischen den Antriebsrädern vermeidbar ist, indem der Umschalter nur im freigeschalteten oder aktivierten Zustand umschaltbar ist.

Bei einer Ausgestaltung der Erfindung kann vorgesehen sein, dass eine zweite Bedingung für die Drehzahl-Istwerte der Antriebsräder hinterlegt ist, und dass die Prüfeinrichtung zur Betätigung des aktivierten oder freigeschalteten Umschalters bei Erfüllung der zweiten Bedingung eingerichtet ist. Von Vorteil ist dabei, dass ein Hystereseverhalten am Umschalter bei geeigneter Wahl des ersten Schwellwerts und des zweiten Schwellwerts einrichtbar ist.

Bei einer Ausgestaltung der Erfindung kann vorgesehen sein, dass in jeder Regeleinrichtung eine Funktion hinterlegt ist, mit welcher zu einem Drehmoment-Sollwert ein Drehmoment-Grenzwert berechenbar ist. Von Vorteil ist dabei, dass eine zentrale Steuerung, welche die Drehmoment-Grenzwerte berechnet und/oder einstellt, verzichtbar ist. Von Vorteil ist weiter, dass die bekannten Regelkreise und Regeleinrichtungen der einzelnen Antriebsräder durch eine geringfügige Modifikation zur Ausführung des erfindungsgemäßen Verfahrens einrichtbar sind.

Bei einer Ausgestaltung der Erfindung kann vorgesehen sein, dass die oder eine in der Regeleinrichtung hinterlegte Funktion zu bremsenden Drehmoment-Sollwerten einen Drehmoment-Grenzwert von Null vorgibt. Von Vorteil ist dabei, dass auf einfache Weise vermeidbar ist, dass ein zu bremsendes oder gebremstes Antriebsrad durch das andere Antriebsrad unerwünscht geschoben wird.

Als Anwendung der Erfindung ist bei einem schienengebundenen Regalbediengerät, mit wenigstens zwei Antriebsrädern, welche in Fahrtrichtung hintereinander zur Aufführung an einer gemeinsamen Schiene angeordnet sind, wobei für jedes Antriebsrad eine Regeleinrichtung eingerichtet ist, welche einen Regelkreis zur Ermittlung eines Drehmoments-Sollwerts für das jeweilige Antriebsrad bildet, vorgesehen, dass eine Ansteuerung der Regeleinrichtungen so eingerichtet ist, dass ein Schieben des schnelleren Antriebsrades durch das langsamere Antriebsrad vermieden oder vermeidbar ist. Von Vorteil ist dabei, dass ein Einschwenkverhalten bei der Ansteuerung der Antriebsräder vermeidbar ist, da die autarken Regelkreise an den einzelnen Antriebsrädern nutzbar sind. Es sind somit erheblich schnellere Kurvendurchfahrten als bei den bisher bekannten Regelverfahren möglich, ohne das schwerwiegende Schädigungen an dem Fahrzeug auftreten.

Eine Lösung von eigenständiger Bedeutung kann bei einem schienengebundenen Regelbediengerät mit wenigstens zwei Antriebsrädern, welche in Fahrtrichtung hintereinander zur Führung an einer gemeinsamen Schiene angeordnet sind, wobei für jedes Antriebsrad eine Regeleinrichtung eingerichtet ist, welche einen Regelkreis zur Ermittlung eines Drehmoment-Sollwertes für das jeweilige Antriebsrad bildet, vorsehen, dass eine erfindungsgemäße Kurvenfahrsteuerungsvorrichtung mit einer Prüfeinrichtung ausgebildet ist, wobei mit der Prüfeinrichtung das momentan langsamer laufende Antriebsrad erkennbar ist, dass jede Regeleinrichtung eine Begrenzungseinrichtung zur Einstellung eines variablen Drehmoment-Grenzwertes für die ermittelbaren Drehmoment-Sollwerte aufweist und dass die Prüfeinrichtung mit den Begrenzungseinrichtungen der wenigstens zwei Antriebsräder derart in Ansteuerungsverbindung steht, dass jeweils die Begrenzungseinrichtung des von der Prüfeinrichtung als momentan langsamer laufend erkannten Antriebsrades aktiviert ist. Von Vorteil ist dabei, dass die bereits erwähnten kritischen Zustände beim Durchfahren einer Schienenkurve mit einem minimalen Eingriff in die ansonsten unverändert belassenen Regelkreise der Antriebsräder vermeidbar sind, wodurch die Standzeit des Fahrzeugs insgesamt wirkungsvoll erhöhbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert.

Es zeigt:
Fig. 1 ein Blockschaltbild einer erfindungsgemäßen Kurvenfahrtsteuerungsvorrichtung bei einem erfindungsgemäßen schienengebundenen Regalbediengerätes zur Erläuterung des erfindungsgemäßen Verfahrens,
Fig. 2 eine alternative Ausführungsform der Prüfeinrichtung gemäß Fig. 1 in stark vereinfachter Blockbilddarstellung,
Fig. 3 die Bewegungszustände eines schienengebundenen Regalbediengerätes beim Durchfahren von Schienenkurven,
Fig. 4 den zeitlichen Verlauf des Quotienten aus den Drehzahl-Istwerten beim Durchfahren einer Kurve ohne Anwendung des erfindungsgemäßen Verfahrens und
Fig. 5 den zeitlichen Verlauf der Drehzahl-Istwerte bei Anwendung des erfindungsgemäßen Verfahrens.

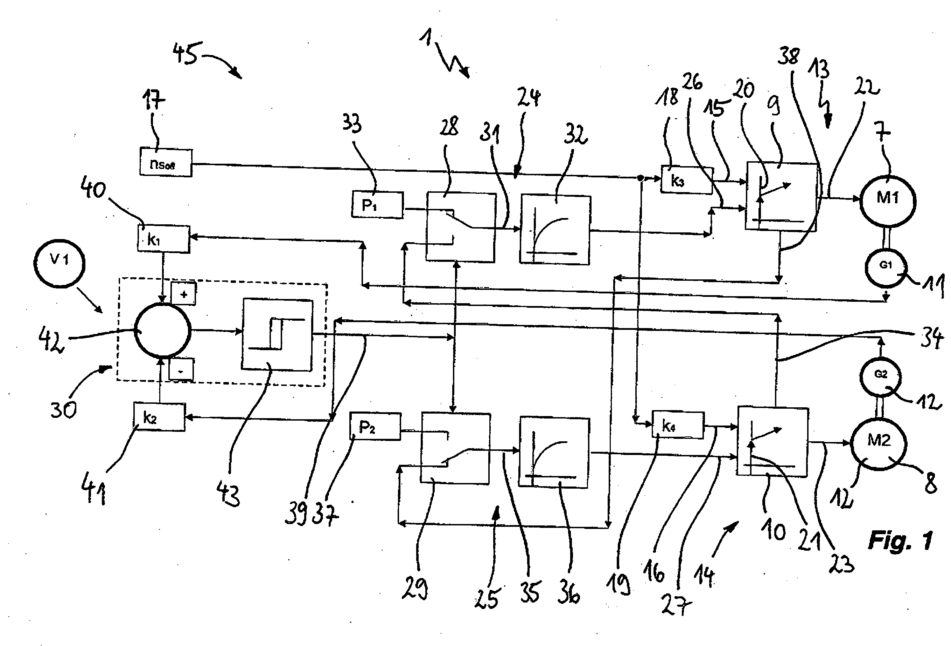

Fig. 1 zeigt in einer stark vereinfachten Prinzipskizze wichtige Einzelheiten und Bestandteile eines im Ganzen mit 1 bezeichneten schienengebundenen Fahrzeugs.

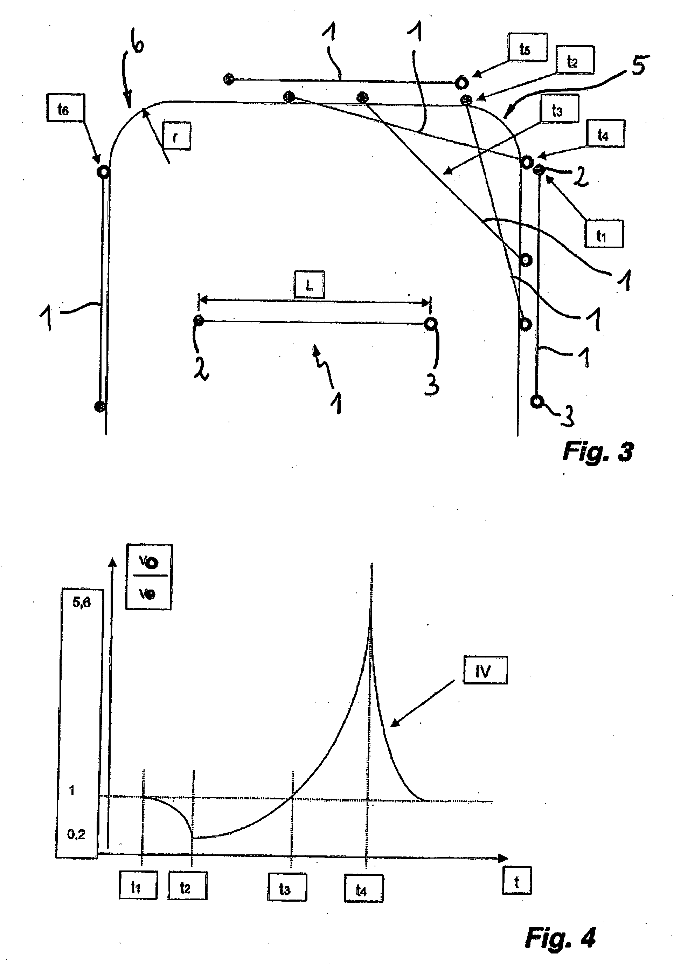

Fig. 3 zeigt das schienengebundene Regalbediengerät 1 (im Folgenden auch "Fahrzeug" genannt) in einer alternativen, ebenfalls stark vereinfachten Darstellung.

Das schienengebundene Fahrzeug 1 hat zwei Antriebsräder 2, 3 (in Fig. 1 nicht dargestellt), welche an dem schienengebundenen Fahrzeug 1 in einem festen Abstand L voneinander angeordnet sind. Durch diese Anordnung ist eine mechanische Kopplung zwischen den Antriebsrädern 2, 3, gegeben.

Fig. 3 zeigt ferner eine Schiene 4, an welcher die Antriebsräder 2, 3 im Betrieb geführt sind. Die Antriebsräder 2, 3 sind beim Verfahren auf der gemeinsamen genutzten Schiene 4 hintereinander angeordnet.

Fig. 3 zeigt unterschiedliche Positionen, welche das schienengebundene Fahrzeug 1 beim Durchfahren der Schienenkurven 5 und 6 der Schiene 4 durchläuft.

Dargestellt ist jeweils die Position des Antriebsrads 2 als gefüllter Kreis und die Position des Antriebsrads 3 als Kreisring.

Die dargestellten Positionen entsprechen den Zeitpunkten t1, t2, t3, t4, t5 und t6 im Verlauf der Durchfahrt.

Fig. 3 zeigt daher nicht mehrere schienengebundene Fahrzeuge 1, sondern nur ein einziges schienengebundenes Fahrzeug 1 zu unterschiedlichen Zeitpunkten.

Fig. 1 zeigt den Motor 7, mit welchem das Antriebsrad 2 angetrieben wird, und den Motor 8, mit welchem des Antriebsrades 3 angetrieben wird.

Jedem Motor 7, 8 und somit jedem Antriebsrad 2, 3 ist eine Regeleinrichtung 9, 10 zugeordnet, welche mit an die Motoren 7, 8 mechanisch gekoppelten Gebern 11, 12 jeweils einen Regelkreis 13, 14 zur Ermittlung eines Drehmoment-Sollwertes für das jeweilige Antriebsrad 2, 3 bilden. Statt der Geber 11, 12 können die Drehzahl-Istwerte der Antriebsräder 2, 3 auch auf andere Weise bestimmt werden, beispielsweise aus den Motorbetriebsgrößen der Motoren 7, 8.

In Fig. 1 wird der Regeleinrichtung 9, 10 über einen Eingang 15, 16 ein Drehzahl-Sollwert 17 (n_{Soll}), welcher gegebenenfalls über Anpassungsverstärker 18, 19 mit einem Verstärkungsfaktor k3 bzw. k4 vorverstärkt wird, zugeführt.

Jede Regeleinrichtung 9, 10 berechnet mit einer hinterlegten Funktion 20, 21 aus dem Drehzahl-Sollwert 17 einen Drehmoment-Sollwert, welcher am jeweiligen Ausgang 22, 23 dem zugeordneten Motor 7, 8 für das jeweilige Antriebsrad 2, 3 vorgegeben wird.

Zur Ermittlung des Drehmoment-Sollwertes verarbeitet jede Regeleinrichtung 9, 10 in nicht weiter dargestellter und an sich bekannter Weise die Information von dem jeweils zugeordneten Geber 11, 12.

Jeder Regeleinrichtung 9, 10 ist eine Begrenzungseinrichtung 24, 25 zugeordnet, mit welcher ein variabler Drehmoment-Grenzwert für die in der Regeleinrichtung 9, 10 ermittelbaren Drehmoment-Sollwerte einstellbar ist.

Jede Regeleinrichtung 9 (10) weist hierzu einen zweiten Eingang 26 (27) auf, über welchen für jede Regeleinrichtung 9 (10) ein Drehmoment-Grenzwert vorgebbar ist, welcher durch den jeweils in der Regeleinrichtung 9 (10) ermittelten Drehmoment-Sollwert nicht überschritten werden kann. Der für die Drehmoment-Sollwerte erlaubte Drehmoment-Bereich ist somit nach oben begrenzt oder beschränkt. Der Drehmoment-Sollwert liegt somit jeweils in dem Drehmoment-Bereich zwischen Null und dem Drehmoment-Grenzwert, wobei die Bereichsgrenzen mit eingeschlossen sind. Abweichungen des Drehmoment-Sollwerts vom Drehmoment-Grenzwert nach unten werden somit zugelassen, Abweichungen nach oben jedoch verhindert. Innerhalb des durch den Drehmoment-Grenzwert abgegrenzten Drehmoment-Bereichs wird der Drehmoment-Sollwert durch die jeweilige Regeleinrichtung 9, 10 und die jeweiligen Regelkreise 13, 14 frei eingestellt.

Die jeweils aktivierte Begrenzungseinrichtung 24, 25 ist hierbei so eingerichtet ist, dass durch den eingestellten Drehmoment-Grenzwert ein Drehmoment-Bereich für den Drehmoment-Sollwert zwischen Null und dem Drehmoment-Grenzwert definiert ist, und dass Abweichungen des Drehmoment-Sollwerts vom eingestellten Drehmoment-Grenzwert nach unten zugelassen sind.

Die Regeleinrichtungen 9, 10 sind daher so eingerichtet, dass an den Ausgängen 22, 23 maximal der über den zweiten Eingang 26, 27 vorgegebene Drehmoment-Grenzwert ausgegeben wird. Für beide Antriebsräder (2, 3) wird hierbei jeweils derjenige Drehmoment-Sollwert unabhängig voneinander und/oder separat ermittelt, der zur Erreichung des Drehzahl-Sollwerts (n_{Soll}) erforderlich ist.

Die Begrenzungseinrichtung 24, 25 haben jeweils einen Umschalter 28, 29, welcher über eine Prüfeinrichtung 30 angesteuert wird.

Der Umschalter 28 ist dabei so eingerichtet, dass der Eingang 31 einer Grenzwertvorgabeeinheit 32 und damit der zweite Eingang 26 der Regeleinrichtung 9 entweder mit einer Speichereinrichtung 33, in welcher ein Maximalwert P1 hinterlegt ist, oder mit einem zweiten Ausgang 34 der anderen Regeleinrichtung 10 verbindbar ist.

Die Stellung des Umschalters 28 bestimmt daher, ob der konstante Maximalwert P1 aus der Speichereinheit 33 oder das Ausgangssignal am zweiten Ausgang 34 der Regeleinrichtung 10 des anderen Antriebsrads 3 an den zweiten Eingang 26 der Regeleinrichtung 9 zur Einstellung eines Drehmoment-Grenzwertes weitergegeben werden soll.

In analoger Weise ist der zweite Eingang 27 der Regeleinrichtung 10 über den Eingang 35 einer Grenzwertvorgabeeinheit 36 der Begrenzungseinrichtung 25 mit einer Speichereinheit 37, in welcher ein konstanter Maximalwert P2 für den Drehmoment-Grenzwert hinterlegt ist, oder mit einem zweiten Ausgang 38 der anderen Regeleinrichtung 9 des anderen Antriebsrads 2 verbindbar.

Jede Regeleinrichtung 9, 10 ist so eingerichtet, dass an dem zugehörigen zweiten Ausgang 34, 38 ein Ausgangssignal ausgegeben wird, welches mit dem Ausgangssignal für den Drehmoment-Sollwert am Ausgang 22, 23 korreliert. Im einfachsten Fall ist das Ausgangssignal am zweiten Ausgang 38 durch das Ausgangssignal am ersten Ausgang 22 und das Ausgangssignal am zweiten Ausgang 34 durch das Ausgangssignal am ersten Ausgang 23 vorgegeben bzw. bestimmt oder sogar diesem gleich.

Ist der Umschalter 28, 29 mit der zugehörigen Speichereinheit 33, 37 verbunden, so ist die jeweilige Begrenzungseinrichtung 24, 25 deaktiviert.

Stellt der Umschalter 28, 29 eine Verbindung mit dem zweiten Ausgang 34, 38 der jeweils anderen Regeleinrichtung 9, 10 her, so ist die jeweilige Begrenzungseinrichtung 24, 25 aktiviert, und der an dem zweiten Ausgang 34, 38 anliegende variable Drehmoment-Grenzwert wird an der angesteuerten Regeleinrichtung 9, 10 eingestellt.

Die Prüfeinrichtung 30 steuert die Umschalter 28, 29 über eine Ansteuerungsleitung 39 als Wechselschalter derart an, dass die Begrenzungseinrichtung 24 immer dann aktiviert ist, wenn die Begrenzungseinrichtung 25 deaktiviert ist, und umgekehrt.

In Fig. 1 ist die Situation dargestellt, in welcher die Begrenzungseinrichtung 24 deaktiviert ist, während die Begrenzungseinrichtung 25 aktiviert ist.

Die Prüfeinrichtung 30 steuert den Umschalter 28, 29 hierbei so an, dass immer diejenige Begrenzungseinrichtung 24, 25 aktiviert ist, welche dem Motor 7, 8 des schneller laufenden Antriebsrats 2, 3 zugeordnet ist. Hierzu verarbeitet die Prüfeinrichtung 30 als Eingangsgrößen 40, 41 die Drehzahl-Istwerte G1, G2 (nach einer Vorverstärkung mit Verstärkungsfaktoren k1, k2) von den Gebern 11, 12 der Motoren 7, 8.

In einem Komparator 42 wird die Differenz der Eingangsgrößen 40, 41 gebildet.

In einer Ansteuerungseinheit 43 werden Vorzeichen abhängig die Umschalter 28, 29 angesteuert, wobei eine Hysterese realisiert ist, so dass bei einem Vorzeichenwechsel nicht direkt die Umschaltung der Umschalter 28, 29 ausgeführt wird.

Fig. 1 zeigt den Schaltzustand, wenn das Antriebsrad 2 am Motor 7 schneller läuft als das Antriebsrad 3 am Motor 8.

In diesem Fall ist die Regeleinrichtung 9 - abgesehen von einer beim Betrieb des Motors 7 bestehenden maximalen Begrenzung - derart geschaltet, dass ein zur Erreichung des Drehzahl-Sollwerts 17 erforderlicher Drehmoment-Sollwert auch tatsächlich am Ausgang 22 bereitgestellt wird.

Gleichzeitig wird am zweiten Ausgang 38 ein Drehmoment-Grenzwert bereitgestellt, welcher über den Umschalter 29 an die Regeleinrichtung 10 weitergegeben wird.

Wenn die Regeleinrichtung 10 einen Drehmoment-Sollwert zu dem Drehzahl-Sollwert 17 berechnet, der über diesem Drehmoment-Grenzwert von der Regeleinrichtung 9 liegt, so wird am Ausgang 23 der Regeleinrichtung 10 dieser Drehmoment-Grenzwert ausgegeben.

Andernfalls wird der ermittelte Drehmoment-Sollwert ausgegeben. Der Drehmoment-Sollwert an der Regeleinrichtung 10 ist somit durch den Drehmoment-Grenzwert von der Regeleinrichtung 9 begrenzt.

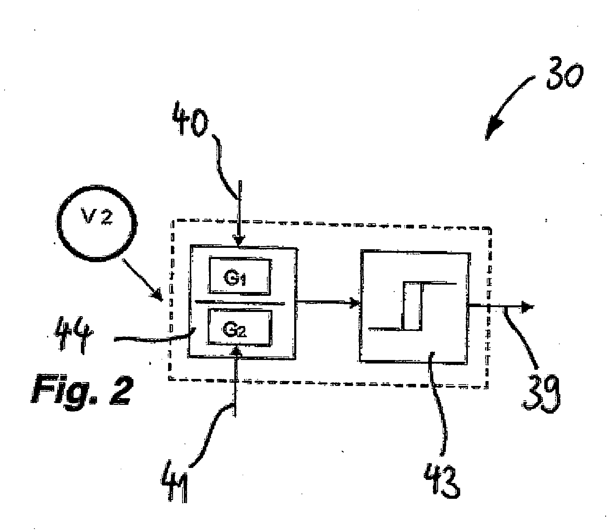

Fig. 2 zeigt eine weitere Prüfeinrichtung 30, die anstelle der Prüfeinrichtung 30 in Fig. 1 verwendbar ist. In der Prüfeinrichtung 30 gemäß Fig. 2 werden die Eingangsgrößen 40, 41, also die Drehzahl-Istwerte k1 und k2, einem Mittel zur Quotientenbildung 44 zugeführt, in welchem der Quotient G1/G2 aus der Eingangsgröße 40 (Drehzahl-Istwert G1) im Zähler und der Eingangsgröße 41 (Drehzahl-Istwert G2) im Nenner berechnet wird.

Dieser Quotient wird analog zu Fig. 1 einer Ansteuerungseinheit 43 zugeführt, welche ein Hystereseverhalten realisiert. Sobald in der Variante gemäß Fig. 2 der berechnete Quotient einen Wert von 1,05 überschreitet, wird das Antriebsrad 2 an dem Motor 7 als schneller laufendes Rad erkannt, und der Umschalter 28 wird in die in Fig. 1 gezeigte Position gestellt. Gleichzeitig wird der Umschalter 29 in die in Fig. 1 gezeigte Position gestellt.

Bevorzugt ist sogar vorgesehen, dass die Umschalter 28 und 29 mechanisch derart miteinander gekoppelt sind, dass ein Umschalten am Umschalter 28 ohne ein Umschalten am Umschalter 29 nicht möglich ist.

Sobald der in dem Mittel zur Quotientenbildung 44 berechnete Quotient unter 0,95 fällt, wird das Antriebsrad 3 am Motor 8 als das schneller laufende Rad erkannt, und die Umschalter 28 und 29 werden gegenüber der in Fig. 1 gezeigten Schaltstellung umgestellt.

Nun liegt an Regeleinheit 10 der konstante Maximalwert P2 für den Drehmoment-Grenzwert an, so dass die Regeleinheit 10 ohne weitere Begrenzung den notwendigen Drehmoment-Sollwert ermitteln und an den Motor 8 weitergeben kann.

Dagegen liegt nun an den zweiten Eingang 26 der Regeleinheit 9 das über den Umschalter 28 geführte und gegebenenfalls verstärkte Ausgangssignal des zweiten Ausgangs 34 an, so dass die von der Regeleinrichtung 9 ermittelten Drehmoment-Sollwerte durch einen eingestellten Drehmoment-Grenzwert beschränkt werden.

Fig. 3 zeigt ausgewählte Positionen, welche ein schienengebundenes Fahrzeug 1 beim Durchlaufen von Schienenkurven 5, 6 auf einer Schiene 4 einnimmt.

Zu einem Zeitpunkt t1 befindet sich das schienengebundene Fahrzeug 1 im Geradeauslauf, wobei das Antriebsrad 2 das vordere Rad ist.

Fig. 4 stellt den zugehörigen Verlauf des Quotienten aus den Drehzahlen oder Fahrgeschwindigkeiten der Antriebsräder 2, 3 dar, wobei im Zähler des dargestellten Quotienten die Drehzahl oder Fahrgeschwindigkeit des in Fahrtrichtung hinteren Antriebsrads 3 und im Nenner des dargestellten Quotienten die Drehzahl oder Fahrgeschwindigkeit des vorderen Antriebsrads 2 eingetragen ist. Es können statt der Drehzahlen am Antriebsrad 2, 3 auch damit fest korrelierte Größen, beispielsweise eine Drehzahl an dem Motor 7, 8, betrachtet werden.

Bei der Einfahrt des vorderen Antriebsrads 2 in die Schienenkurve 5 erhöht sich die Drehzahl oder Fahrgeschwindigkeit des Antriebsrads 2 im Verhältnis zu der Drehzahl oder Fahrgeschwindigkeit des Antriebsrads 3.

Der in Fig. 4 dargestellte Quotient sinkt daher gegen Null. Im Moment t2 der Ausfahrt des Antriebsrads 2 aus der Schienenkurve 5 wird der erste kritische Punkt im Bewegungsablauf erreicht. Ab diesem Punkt verlangsamt sich das vordere Antriebsrad 2 in Bezug auf das hintere Antriebsrad 3, bis zum Zeitpunkt t3 beide Antriebsräder 2, 3 wieder gleich schnell laufen.

Aus Symmetriegründen ist der Zeitpunkt t3 dann erreicht, wenn der eingeschlossene Innenwinkel zwischen der (Tangente an die) Schiene 4 und der Verbindungsachse zwischen den Antriebsrädern 2, 3 an dem Antriebsrad 2 gleich dem eingeschlossenen Innenwinkel zwischen der (Tangente an die) Schiene 4 und der Verbindungslinie der Antriebsräder 2, 3 am Antriebsrad 3 ist.

Über diesen Punkt hinaus wird das vordere Antriebsrad 2 im Vergleich oder Verhältnis zum hinteren Antriebsrad weiter abgebremst, bis zum Zeitpunkt t4 das vordere Antriebsrad 2 im Verhältnis zu dem hinteren Antriebsrad 3 nahezu oder völlig still steht, so dass der in Fig. 4 gezeigte Quotient sehr große Werte annimmt.

Der Quotient in Fig. 4 ist zum Zeitpunkt t4 also der Kehrwert des Quotienten zum Zeitpunkt t2.

Wird bei der Kurvendurchfahrt bis zum Zeitpunkt t4 die Drehzahl oder Fahrtgeschwindigkeit des vorderen Antriebsrads konstant gehalten, so bedeutet dies, dass im Zeitpunkt t4 an dem anderen Antriebsrad 3 sehr große Drehzahlen oder Fahrtgeschwindigkeiten erreicht sind.

Bei Überschreitung des zweiten kritischen Punkts zum Zeitpunkts t4 wird nun das hintere Antriebsrad 3 im Verhältnis zum vorderen Antriebsrad 2 wieder langsamer, so dass sich die abfallende Kurve gemäß Fig. 4 ergibt.

Aus Fig. 4 ist ersichtlich, dass zum Zeitpunkt t4 eine Unstetigkeit in der zeitlichen Änderung der Geschwindigkeit entsteht, die einen Sprung von einem sehr großen Beschleunigungswert zu einem ebenso großen Beschleunigungswert mit umgekehrten Vorzeichen innerhalb äußerst kurzer Zeitspanne beschreibt.

Es tritt daher am Antriebsrad 3 bei verhältnismäßig hohen Drehzahlen oder Laufgeschwindigkeiten ein starker Lastwechsel auf, welcher große Erschütterungen des schienengebundenen Fahrzeugs 1 erzeugt. Die Erfindung hat nun herausgefunden, dass es gerade diese Lastwechsel bei hohen Drehzahlen oder Fahrtgeschwindigkeiten sind, die häufig den Grund für Beschädigungen des schienengebundenen Fahrzeugs 1 beim Durchlauf einer Schienenkurve 5, 6 darstellen.

Diese kritischen Punkte vom Typ zum Zeitpunkt t4 (Spitzen) vermeidet die Erfindung gerade durch die Ausrüstung des schienengebunden Fahrzeugs 1 mit der Kurvenfahrtsteuerungsvorrichtung 45 gemäß Fig. 1 bzw. Fig. 2.

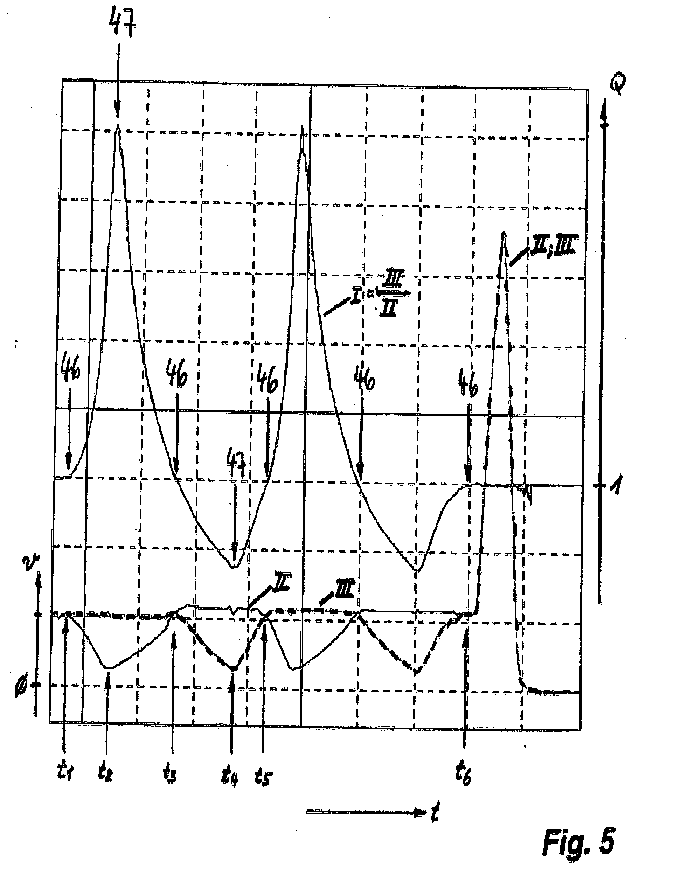

Diese Kurvenfahrtsteuerungsvorrichtung 45, die zumindest die Regeleinrichtungen 9, 10 des Regelkreises 13, 14, die Begrenzungseinrichtungen 24, 25 und die Prüfeinrichtung 30, im Ausführungsbeispiel sogar alle in Fig. 1 bzw. Fig. 2 ersichtlichen Bestandteile mit Ausnahme der Motoren 7, 8 und möglicherweise der Geber 11, 12 umfasst, bewirkt eine Veränderung der Geschwindigkeitsverläufe gegenüber Fig. 4, die zu einem Ergebnis gemäß Fig. 5 führt.

In Fig. 5 sind dargestellt der zeitliche Verlauf der Drehzahl oder Fahrtgeschwindigkeit am Antriebsrad 3 (durchgezogenen Linie, II), die Drehzahl oder Fahrtgeschwindigkeit am Antriebsrad 2 (gestrichelte Linie, III) sowie der Quotient aus der Drehzahl oder Fahrtgeschwindigkeit am Antriebsrad 2 im Zähler und der Drehzahl oder Fahrtgeschwindigkeit am Antriebsrad 3 im Nenner (I).

Zum Zeitpunkt t1 sind die beiden Antriebsräder 2, 3 gleich schnell, und es wird angenommen, dass das Antriebsrad 2 bereits als schneller laufendes Antriebsrad erkannt ist, möglicherweise als Folge einer Hystereseeinstellung.

Der Bewegungsablauf in Fig. 5 zeigt den Fall eines zeitlich konstanten vorgegebenen Drehzahl-Sollwerts 17.

Bei der Einfahrt in die Schienenkurve 5 zwischen den Zeitpunkten t1 und t2 wird das hintere Antriebsrad 3 langsamer, da das vordere Antriebsrad als schneller laufendes Antriebsrad so drehmoment-geregelt wird, dass der Drehzahl-Sollwert n_{Soll} eingehalten wird.

Der Regelkreis 14 des hinteren Antriebsrads 3 versucht daher zwar, einen größeren Drehmoment-Sollwert vorzugeben, damit das Antriebsrad 3 auf den vorgegeben Drehzahl-Sollwert n_{Soll} gebracht wird.

Allerdings ist der Umschalter 29 in der Stellung gemäß Fig. 1 geschaltet, da das Antriebsrad 2 als schneller laufendes Antriebsrad erkannt ist.

Daher wird der Drehmoment-Sollwert an der Regeleinrichtung 10 durch das Ausgangssignal 38 der Regeleinrichtung 9 begrenzt.

Die Regeleinrichtung 9 stellt aber fest, dass das Antriebsrad 2 schon im Wesentlichen den vorgegebenen Drehzahl-Sollwert 17 aufweist, so dass am Antriebsrad 2 im Wesentlichen kein Drehmoment zur Aufrechterhaltung der Drehzahl benötigt wird. Der von der Regeleinrichtung 9 vorgegebene Drehmoment-Sollwert ist daher sehr klein.

Demzufolge ist der über den Umschalter 29 auf den zweiten Eingang 27 der Regeleinrichtung 10 gegebene Drehmoment-Grenzwert ebenfalls sehr klein. Dies verhindert, dass der Motor 8 ein großes Drehmoment entwickeln kann. In der Folge wird das Antriebsrad 3 auf eine geringe Drehzahl oder Laufgeschwindigkeit abgebremst, da kein Drehmoment aufgebaut wird, das dieser Abbremsung, die durch die mechanische Verbindung der Antriebsräder 2, 3 miteinander und mit einem Schwerpunkt des schienengebundenen Fahrzeugs 1 hervorgerufen wird, entgegenwirken würde.

Dieses Verfahren setzt sich bis zum Zeitpunkt t3 fort, in welchem am Antriebsrad 3 dieselbe Drehzahl oder Fahrtgeschwindigkeit vorliegt wie am Antriebsrad 2.

Bei Überschreitung dieses Punktes oder in der Nähe diese Punktes schaltet die Ansteuerungseinheit 43 über die Ansteuerungsleitung 39 die Umschalter 28, 29 um, so dass nun die Regeleinrichtung 9 drehmomentbegrenzt ist, während die Regeleinrichtung 10 freigegeben ist.

Deutlich ist in der Fig. 5 ersichtlich, dass an dem langsameren Antriebsrad 3 kurz vor t3 eine stärkere Beschleunigung einsetzt, die aus dem Umschalten resultiert.

Denn zu diesem Zeitpunkt wird die Drehmomentbegrenzung an dem langsameren Antriebsrad 3 aufgehoben oder freigegeben, und das nun als schneller laufend erkannte Antriebsrad 3 wird stärker beschleunigt, bis der Drehzahl-Sollwert n_{Soll} erreicht ist.

Dementsprechend schiebt das bisher als langsamer erkannte und tatsächlich noch langsamere Antriebsrad 3 das bisher schnellere Antriebsrad 2, so dass sich dessen Geschwindigkeit ebenfalls geringfügig anhebt.

Somit wird nun das Drehmoment für den Motor 8 derart geregelt, dass am Antriebsrad 3 der vorgegebene Drehzahl-Sollwert 17 (n_{Soll}) eingehalten wird, während das Antriebsrad 2 entsprechend langsamer wird, da der Motor 7 nicht mehr das zur Aufrechterhaltung des Drehzahl-Sollwertes n_{Soll} nötige Drehmoment entwickeln kann.

Zum Zeitpunkt t5 oder in der Nähe des Zeitpunktes t5 betätigt die Ansteuerungseinheit 43 erneut die Umschalter 28, 29, so dass nun wieder die Begrenzungseinrichtung 25 aktiviert und die Begrenzungseinrichtung 24 deaktiviert ist.

Es schließt sich das eben beschriebene Verfahren erneut für den Fall der Kurvendurchfahrt durch die Schienenkurve 6 an.

Aus Fig. 5 ist ersichtlich, dass ein Umschalten und somit ein Aktivieren bzw. Deaktivieren der Begrenzungseinrichtung 24, 25 zu den Zeitpunkten 46 erfolgt. Zu den kritischen Zeitpunkten 47, an denen sich kritische Spitzen oder Kerbtäler im Drehzahl-Zeit-Diagramm bilden, sind dagegen immer beide Drehzahl-Istwerte zumindest näherungsweise durch den Drehzahl-Sollwert 17 begrenzt. Es treten daher keine Lastwechsel auf, wenn eines der Antriebsräder 2, 3 einen gefährlich großen Drehzahl-Istwert aufweist.

Das erfindungsgemäße Verfahren ist auch bei schienengebundenen Fahrzeugen 1 einsetzbar, die mehr als zwei hintereinander an einer gemeinsamen Schiene 4 angeordnete Antriebsräder 2, 3 aufweisen.

Wird bei dem Durchfahren der Schienenkurve 5 oder 6 der Drehzahl-Sollwert 17 durch einen Benutzer oder ein vorgegebenes Programm erniedrigt, so muss das schienengebundene Fahrzeug 1 abgebremst werden, um den neuen Drehzahl-Sollwert 17 erreichen zu können.

Geschieht diese Herabsetzung des Drehzahl-Sollwerts 17 beispielsweise zwischen den Zeitpunkten t1 und t3, so wird die Regeleinrichtung 9 für den Motor 7 einen Drehmoment-Sollwert mit negativen Vorzeichen, also einen Sollwert für ein Brems-Drehmoment, am Ausgang 22 ausgeben.

Wie bereits erläutert, befindet sich der Regelkreis 14 der anderen Regeleinrichtung 10 in der Zeit in einem Zustand, in welchem aufgrund der Drehmomentbegrenzung der erforderliche Drehmoment-Sollwert zur Erreichung des Drehzahl-Sollwerts 17 nicht am Ausgang 23 ausgegeben werden kann, wenn er den momentan eingestellten Drehmoment-Grenzwert übersteigt.

Der Regelkreis 14 ist daher ohne weitere Maßnahmen nicht in der Lage, dass richtige Brems-Drehmoment für den Motor 8 zu berechnen. Es besteht daher die Gefahr, dass der Motor 8 entweder zu stark bremst oder das Antriebsrad 2 schiebt. In beiden Fällen würden an dem schienengebundenen Fahrzeug 1 gefährliche Lastwechsel auftreten.

Daher gibt die Regeleinrichtung 9 an ihrem zweiten Ausgang 38 als Drehmoment-Grenzwert den Wert Null aus, so dass in der Folge am Ausgang 23 der Regeleinrichtung 10 als Drehmoment-Sollwert immer der Wert Null vorliegt. Der Motor 8 ist daher freigegeben und entwickelt kein Drehmoment, und das Antriebsrad 3 rollt frei mit.

Im Folgenden wird beschrieben, wie das Umschalten an den Umschaltern 28 und 29 ausgelöst wird.

Hierzu werden ein erster Schwellwert und ein zweiter Schwellwert bereitgestellt. Der zweite Schwellwert liegt hierbei als Zahlenwert zwischen dem ersten Schwellwert und 1.

Die Umschalter 28, 29 werden zum Umschalten aktiviert oder freigeschaltet, wenn der erste Schwellwert unterschritten wird. Das Umschalten wird anschließend ausgelöst, wenn der zweite Schwellwert überschritten wird.

Auf diese Weise wird die Vorgeschichte der Antriebssteuerung erfassbar, um Mehrdeutigkeiten zu vermeiden.

Wird beispielsweise der Quotient aus dem Drehzahl-Istwert des langsameren Antriebsrades 2 im Zähler und aus dem Drehzahl-Istwert des schnelleren Antriebsrades im Nenner betrachtet, so liegt der erste Schwellwert bei einem Ausführungsbeispiel bei 0,8 und der zweite Schwellwert bei 0,9.

Der Vergleich des Quotienten mit den Schwellwerten definiert jeweils eine Bedingung, die erfüllt ist, wenn der Quotient den Schwellwert, erreicht und/oder unter- oder überschreitet.

Die Prüfeinrichtung 30 überwacht somit das Verhältnis der Drehzahl-Istwerte und registriert zunächst ein Abfall des Verhältnisses auf oder unter einen vorgegebenen ersten Schwellwert, beispielsweise 0,8.

Nach Unterschreiten dieses ersten Schwellwertes werden die Umschalter 28, 29 für das Umschalten aktiviert oder freigeschaltet. Es erfolgt aber noch kein Umschalten. Vielmehr wird in der Prüfeinrichtung 30 überwacht, wann ein zweiter Schwellwert, der über dem ersten Schwellwert liegt, erreicht oder überschritten wird. Im Beispiel ist dies der Schwellwert 0,9.

Wird dieser zweite Schwellwert erreicht oder überschritten, so findet ein Umschalten der Umschalter 28, 29 statt. Auf diese Weise kann die Prüfeinrichtung 30 beispielsweise den Zeitpunkt kurz nach t1 von dem Zeitpunkt kurz vor t3 in Fig. 5 unterscheiden.

Wird der reziproke Quotient betrachtet, so liegen der erste Schwellwert beispielsweise bei 1,2 und der zweite Schwellwert beispielsweise bei 1,1. In diesem Fall wird der erste Schwellwert zur Auslösung oder Aktivierung oder Freischaltung der Umschalter 28, 29 erreicht oder überschritten, und der zweite Schwellwert wird zur Auslösung der Umschaltung erreicht oder unterschritten. Diese Bedingungen ergeben sich somit aus den zuvor beschriebenen Bedingungen durch eine einfache Umformung oder Transformation. Alle durch derartige Umformungen oder Transformationen definierbare Bedingungen sind bei der Erfindung verwendbar.

Im Ausführungsbeispiel ist noch regelungstechnisch vorgesehen, dass zu Beginn einer Kurvendurchfahrt, also bei einer Kurveneinfahrt, der Drehzahl-Sollwert von einem Drehzahl-Sollwert für Geradeausfahrt auf einen Drehzahl-Sollwert für Kurvendurchfahrt abgesenkt wird, um Fliehkräfte innerhalb eines zulässigen Rahmens zu halten. Dieser reduzierte Drehzahl-Sollwert für Kurvendurchfahrt kann bei der Erfindung während der gesamten Kurvendurchfahr als Drehzahl-Sollwert am jeweils schneller laufenden Antriebsrad konstant eingestellt werden oder sein.

Bei dem Verfahren zum Steuern der Längsbewegung eines schienengebunden Fahrzeugs 1, welches wenigstens zwei Antriebsräder 2, 3 aufweist, die an einer gemeinsamen Schiene 4 geführt sind, wird vorgeschlagen, den an dem langsamer laufenden Antriebsrad 2, 3 eingestellten Drehmoment-Sollwert zu einem Drehzahl-Sollwert 17 durch den Drehmoment-Sollwert des schneller laufenden Antriebsrad 2, 3 zu dem Drehzahl-Sollwert 17 zu begrenzen.

### Bezugszeichenliste

- 1: schienengebundenes Fahrzeug
- 2,3: Antriebsrad
- 4: Schiene
- 5,6: Schienenkurve
- 7,8: Motor
- 9,10: Regeleinrichtung
- 11,12: Geber
- 13,14: Regelkreis
- 15,16: Eingang
- 17: Drehzahl-Sollwert
- 18,19: Anpassungsverstärker
- 20,21: Funktion
- 22,23: Ausgang
- 24,25: Begrenzungseinrichtung
- 26,27: zweiter Eingang
- 28,29: Umschalter
- 30: Prüfeinrichtung
- 31: Eingang
- 32: Grenzwertvorgabeeinheit
- 33: Speichereinheit
- 34: zweiter Ausgang
- 35: Eingang
- 36: Grenzwertvorgabeeinheit
- 37: Speichereinheit
- 38: zweiter Ausgang
- 39: Ansteuerungsleitung
- 40,41: Eingangsgröße
- 42: Komparator
- 43: Ansteuerungseinheit
- 44: Mittel zur Quotientenbildung
- 45: Kurvenfahrtsteuerungsvorrichtung
- 46: Umschaltzeitpunkt
- 47: kritischer Zeitpunkt
- t1, t2, t3, t4, t5, t6: Zeitpunkt
- k1, k2, k3, k4: Verstärkungsfaktor
- G1, G2: Drehzahl-Istwert
- P1, P2: Maximalwert

## Patentansprüche

1. Verfahren zum Steuern der Längsbewegung eines schienengebundenen Regalbediengerätes,
wobei das Regalbediengerät (1) durch wenigstens zwei an einer gemeinsamen Schiene (4) in Fahrtrichtung beabstandet zueinander geführte Antriebsräder (2, 3) angetrieben wird und wobei für jedes der wenigstens zwei Antriebsräder (2, 3) jeweils ein Drehmoment-Sollwert ermittelt wird,
**dadurch gekennzeichnet,**
**dass** ein Antriebsrad (2, 3) der wenigstens zwei Antriebsräder (2, 3) als momentan langsamer laufendes Antriebsrad (2, 3) erkannt wird
und **dass** für das als momentan langsamer laufend erkannte Antriebsrad (2, 3) zusätzlich ein variabler Drehmoment-Grenzwert eingestellt wird,
welcher den ermittelbaren Drehmoment-Sollwert für dieses Antriebsrad (2, 3) nach oben begrenzt.

2. Verfahren nach Anspruch 1,
**dadurch gekennzeichnet,**
**dass** bei einer Durchfahrt einer Schienenkurve (5, 6) die wenigstens zwei Antriebsräder (2, 3) derart angesteuert werden,
**dass** eine plötzliche Drehzahländerung am schneller laufenden Antriebsrad (2, 3) vermieden wird.

3. Verfahren nach einem der vorangehenden Ansprüche,
**dadurch gekennzeichnet,**
**dass** durch den eingestellten Drehmoment-Grenzwert ein Drehmoment-Bereich für den Drehmoment-Sollwert zwischen Null und dem Drehmoment-Grenzwert definiert wird, und/oder
**dass** durch den eingestellten Drehmoment-Grenzwert Abweichungen des Drehmoment-Sollwerts vom Drehmoment-Grenzwert nach unten zugelassen werden und/oder
**dass** an dem als momentan schneller laufend erkannten Antriebsrad (2, 3) der für dieses Antriebsrad (2, 3) ermittelte Drehmoment-Sollwert vorgegeben wird
und/oder
**dass** an dem als momentan langsamer laufend erkannten Antriebsrad (2, 3) der für dieses Antriebsrad (2, 3) ermittelte Drehmoment-Sollwert vorgegeben wird,
wenn dieser Drehmoment-Sollwert den eingestellten Drehmoment-Grenzwert unterschreitet, und/oder
**dass** an dem als momentan langsamer laufend erkannten Antriebsrad (2, 3) der für dieses Antriebsrad (2, 3) eingestellte Drehmoment-Grenzwert vorgegeben wird,
wenn der ermittelte Drehmoment-Sollwert den Drehmoment-Grenzwert überschreitet.

4. Verfahren nach einem der vorangehenden Ansprüche,
**dadurch gekennzeichnet,**
**dass** der Drehmoment-Grenzwert für das als momentan langsamer laufend erkannte Antriebsrad (2, 3) in Abhängigkeit von dem ermittelten Drehmoment-Sollwert, insbesondere gleich dem ermittelten Drehmoment-Sollwert, des anderen Antriebsrades (2, 3), insbesondere des als momentan schneller laufend erkannten Antriebsrades (2, 3), der wenigstens zwei Antriebsräder (2, 3) eingestellt wird,
und/oder
**dass** für beide Antriebsräder (2, 3) jeweils derjenige Drehmoment-Sollwert vorzugsweise unabhängig voneinander und/oder separat ermittelt wird, der zur Erreichung eines Drehzahl-Sollwerts erforderlich ist.

5. Verfahren nach einem der vorangehenden Ansprüche,
**dadurch gekennzeichnet,**
**dass** zur Erkennung des momentan langsamer laufenden Antriebsrades (2, 3) für jedes der wenigstens zwei Antriebsräder (2, 3) jeweils ein Drehzahl-Istwert (G1, G2) gemessen wird und/oder
**dass** zur Ermittlung des als momentan langsamer laufend erkannten Antriebsrades (2, 3) ein Quotient der Drehzahl-Istwerte (G1, G2) der Antriebsräder (2, 3) gebildet wird.

6. Verfahren nach einem der vorangehenden Ansprüche,
**dadurch gekennzeichnet,**
**dass** zur Erkennung des momentan langsamer laufenden Antriebsrades (2, 3) die Laufrichtung wenigstens eines Antriebsrades (2, 3) erfasst wird
und/oder
**dass** ein Antriebsrad (2, 3) als langsamer laufendes Antriebsrad (2, 3) erkannt wird, wenn die betragsmäßige Differenz der Drehzahl-Istwerte (G1, G2) der Antriebsräder (2, 3) einen vorgegebenen Schwellwert erreicht oder überschreitet,
und/oder
**dass** der Schwellwert eine relative Differenz von wenigstens 5%, insbesondere höchstens 10%, der Drehzahl-Istwerte (G1, G2) beschreibt
und/oder
**dass** eine erste Bedingung für die Drehzahl-Istwerte (G1, G2) der Antriebsräder (2, 3) hinterlegt ist, und dass die Erkennung eines langsameren Antriebsrades freigeschaltet oder aktiviert wird, wenn die erste Bedingung erfüllt ist,
und/oder
**dass** eine zweite Bedingung für die Drehzahl-Istwerte (G1, G2) der Antriebsräder (2, 3) hinterlegt ist, und dass ein langsameres Antriebsrades erkannt wird, wenn die zweite Bedingung erfüllt ist.

7. Verfahren nach einem der vorangehenden Ansprüche,
**dadurch gekennzeichnet,**
**dass** der Drehmoment-Grenzwert an dem als momentan langsamer laufend erkannten Antriebsrad (2, 3) auf Null eingestellt wird,
wenn der Drehmoment-Sollwert an dem anderen Antriebsrad (2, 3), insbesondere an dem als momentan schneller laufend erkannten Antriebsrad (2, 3), der wenigstens zwei Antriebsräder (2, 3) ein Brems-Drehmoment beschreibt,
und/oder
**dass** den Antriebsrädern (2, 3) ein Drehzahl-Sollwert (n_{Soll}, 17) vorgeben wird und dass für jedes Antriebsrad (2, 3), vorzugsweise in einem insbesondere dem einzelnen Antriebsrad (2, 3) zugeordneten Regelkreis (13, 14) einer Regeleinrichtung (9, 10), derjenige Drehmoment-Sollwert ermittelt wird, welcher zur Erreichung des vorgegebenen Drehzahl-Sollwertes (n_{Soll}, 17) erforderlich ist
und/oder
**dass** beiden Antriebsrädern (2, 3) derselbe Drehzahl-Sollwert (n_{Soll}, 17) vorgegeben wird und/oder
**dass** der Drehmoment-Grenzwert für das als momentan schneller laufend erkannte Antriebsrad (2, 3) auf einen vorgegebenen, konstanten Maximalwert (P1, P2) eingestellt wird und/oder
**dass** die Drehmoment-Sollwerte für die Antriebsräder (2, 3) voneinander unabhängig bestimmt werden
und/oder
**dass** der der Drehmoment-Grenzwert am momentan als langsamer laufend erkannten Antriebsrad (2, 3) von Null verschieden vorgegeben wird, solange der Drehmoment-Sollwert am momentan als schneller laufend erkannten Antriebsrad (2, 3) größer als Null ist, und/oder
**dass** der Drehmoment-Grenzwert am momentan als langsamer laufend erkannten Antriebsrad (2, 3) mit dem Drehmoment-Sollwert am momentan als schneller laufend erkannten Antriebsrad (2, 3) gekoppelt eingestellt wird
und/oder
**dass** als Drehmoment-Grenzwert am momentan als langsamer laufend erkannten Antriebsrad (2, 3) der Drehmoment-Sollwert am momentan als schneller laufend erkannten Antriebsrad (2, 3) eingestellt oder vorgegeben wird.

8. Kurvenfahrtsteuerungsvorrichtung (45),
mit wenigstens zwei vorzugsweise separat voneinander ausgebildeten Regeleinrichtungen (9, 10),
welche jeweils zur Ermittlung eines Drehmoment-Sollwertes für je ein Antriebsrad (2, 3) von wenigstens zwei hintereinander an einer gemeinsamen Schiene (4) geführten Antriebsrädern (2, 3) eines schienengebundenen Regalbediengerätes, eingerichtet sind,
**dadurch gekennzeichnet,**
**dass** eine Prüfeinrichtung (30) ausgebildet ist,
mit welcher ein Antriebsrad (2, 3) der wenigstens zwei Antriebsräder (2, 3) als momentan langsamer laufendes Antriebsrad (2, 3) erkennbar ist,
**dass** jeder Regeleinrichtung (9, 10) eine Begrenzungseinrichtung (24, 25) zur Einstellung eines variablen nach oben begrenzenden Drehmoment-Grenzwertes für die ermittelbaren Drehmoment-Sollwerte zugeordnet ist
und **dass** die Prüfeinrichtung (30) mit den Begrenzungseinrichtungen (24, 25) der wenigstens zwei Antriebsräder (2, 3) derart in Ansteuerungsverbindung steht,
**dass** jeweils die Begrenzungseinrichtung (24, 25) des von der Prüfeinrichtung (30) als momentan langsamer laufend erkannten Antriebsrades (2, 3) aktiviert ist.

9. Kurvenfahrtsteuerungsvorrichtung (45) nach Anspruch 8,
**dadurch gekennzeichnet,**
**dass** die jeweils aktivierte Begrenzungseinrichtung (24, 25) so eingerichtet ist, dass durch den eingestellten Drehmoment-Grenzwert ein Drehmoment-Bereich für den Drehmoment-Sollwert zwischen Null und dem Drehmoment-Grenzwert definiert ist,
und/oder
**dass** die jeweils aktivierte Begrenzungseinrichtung (24, 25) so eingerichtet ist, dass Abweichungen des Drehmoment-Sollwerts vom eingestellten Drehmoment-Grenzwert nach unten zugelassen sind,
**dass** die jeweils aktivierte Begrenzungseinrichtung (24, 25) mit der Regeleinrichtung (9, 10) des anderen Antriebsrades (2, 3) in Steuerverbindung zur Einstellung des Drehmoment-Grenzwertes steht
und/oder
**dass** die Regeleinrichtungen (9, 10) jeweils zur Ermittlung des Drehmoment-Sollwertes für einen Drehzahl-Sollwert (n_{Soll}, 17) eingerichtet sind
und/oder
**dass** die Regeleinrichtungen (9, 10) unabhängig voneinander betreibbar sind.

10. Kurvenfahrtsteuerungsvorrichtung (45) nach einem der Ansprüche 8 oder 9,
**dadurch gekennzeichnet,**
**dass** die Prüfeinrichtung (30) an Messmittel (11, 12) zur Messung von Drehzahl-Istwerten der wenigstens zwei Antriebsräder (2, 3) angeschlossen oder anschließbar ist und/oder
**dass** die Prüfeinrichtung (30) ein Mittel zur Differenzbildung oder einen Komparator (42) von Drehzahl-Istwerten (G1, G2) aufweist
und/oder
**dass** die Prüfeinrichtung (30) ein Mittel zur Quotientenbildung von Drehzahl-Istwerten (G1, G2) aufweist.

11. Kurvenfahrtsteuerungsvorrichtung (45) nach einem der Ansprüche 8 bis 104,
**dadurch gekennzeichnet,**
**dass** die Prüfeinrichtung (30) einen Schwellwertschalter aufweist.

12. Kurvenfahrtsteuerungsvorrichtung (45) nach einem der Ansprüche 8 bis 11,
**dadurch gekennzeichnet,**
**dass** die Prüfeinrichtung (30) einen Umschalter (28, 29) aufweist oder an wenigstens einen Umschalter (28, 29) angeschlossen ist, mit welchem die Begrenzungseinrichtungen (24, 25) der wenigstens zwei Antriebsräder (2, 3) wechselseitig aktivierbar sind,
und/oder
**dass** eine erste Bedingung für die Drehzahl-Istwerte (G1, G2) der Antriebsräder (2, 3) hinterlegt ist, und dass der Umschalter (28, 29) freigeschaltet oder aktiviert ist, wenn die erste Bedingung erfüllt ist,
und/oder
**dass** eine zweite Bedingung für die Drehzahl-Istwerte (G1, G2) der Antriebsräder (2, 3) hinterlegt ist, und dass die Prüfeinrichtung (30) zur Betätigung des aktivierten oder freigeschalteten Umschalters (28, 29) bei Erfüllung der zweiten Bedingung eingerichtet ist.

13. Kurvenfahrtsteuerungsvorrichtung (45) nach einem der Ansprüche 8 bis 12,
**dadurch gekennzeichnet,**
**dass** in jeder Regeleinrichtung (9, 10) eine Funktion hinterlegt ist, mit welcher zu einem Drehmoment-Sollwert ein Drehmoment-Grenzwert vorzugsweise unabhängig von der jeweils anderen Regeleinrichtung (9, 10) berechenbar ist,
und/oder
**dass** die oder eine in der Regeleinrichtung (9, 10) hinterlegte Funktion zu bremsenden Drehmoment-Sollwerten einen Drehmoment-Grenzwert von Null vorgibt.

14. Schienengebundenes Regalbediengerät,
mit wenigstens zwei Antriebsrädern (2, 3),
welche in Fahrtrichtung hintereinander zur Führung an einer gemeinsamen Schiene (4) angeordnet sind,
wobei für jedes Antriebsrad (2, 3) eine Regeleinrichtung (9, 10) eingerichtet ist,
welche einen Regelkreis (13, 14) zur Ermittlung eines Drehmoment-Sollwertes für das jeweilige Antriebsrad (2, 3) bildet,
**dadurch gekennzeichnet,**
**dass** eine Kurvenfahrtsteuerungsvorrichtung (45) nach einem der Ansprüche 8 bis 13 ausgebildet ist.

15. Schienengebundenes Regalbediengerät (1) nach Anspruch 14,
**dadurch gekennzeichnet,**
**dass** eine Ansteuerung der Regeleinrichtungen (9, 10) so eingerichtet ist,
**dass** ein Schieben des schnelleren Antriebsrades (2, 3) durch das langsamere Antriebsrad (2, 3) vermieden oder vermeidbar ist.

## Claims

1. A method of controlling the longitudinal motion of a railborne storage and retrieval machine, wherein the storage and retrieval machine (1) is driven by at least two driving wheels (2, 3), guided on a common rail (4) at a distance from one another in the direction of travel, and wherein for each of the at least two driving wheels (2, 3) there is in each case determined a torque desired value, **characterized in that** one driving wheel (2, 3) of the at least two driving wheels (2, 3) is identified as a driving wheel (2, 3) running slower at the moment and **in that** for the driving wheel (2, 3) identified as a driving wheel (2, 3) running slower at the moment there is additionally set a variable torque limit value which upwardly bounds the determinable torque desired value for this driving wheel (2, 3).

2. A method according to claim 1, **characterized in that** upon travel through a rail curve (5, 6), the at least two driving wheels (2, 3) are controlled in such a manner that a sudden change in rotational speed is avoided at the faster running driving wheel (2, 3).

3. A method according to any one of the preceding claims, **characterized in that** a torque range between zero and the torque limit value is defined for the torque desired value by the set torque limit value, and/or **in that** deviations of the torque desired value from the torque limit value are permitted downwards by the set torque limit value, and/or **in that** at the driving wheel (2, 3) identified as running faster at the moment there is specified the torque desired value determined for this driving wheel (2, 3), and/or **in that** at the driving wheel (2, 3) identified as running slower at the moment there is specified the torque desired value determined for this driving wheel (2, 3) when this torque desired value falls below the set torque limit value, and/or in that at the driving wheel (2, 3) identified as running slower at the moment there is specified the torque limit value set for this driving wheel (2, 3) when the determined torque desired value exceeds the torque limit value.

4. A method according to any one of the preceding claims, **characterized in that** the torque limit value for the driving wheel (2, 3) identified as running slower at the moment is set dependent on the determined torque desired value, in particular equal to the determined torque desired value, of the other driving wheel (2, 3), in particular of the driving wheel (2, 3) identified as running faster at the moment, of the at least two driving wheels (2, 3), and/or **in that** for both driving wheels (2, 3) in each case that torque desired value which is required to reach a speed desired value is preferably determined independently and/or separately.

5. A method according to any one of the preceding claims, **characterized in that** to identify the driving wheel (2, 3) running slower at the moment for each of the at least two driving wheels (2, 3) there is in each case measured a speed actual value (G1, G2), and/or **in that** to determine the driving wheel (2, 3) identified as running slower at the moment there is formed a quotient of the speed actual values (G1, G2) of the driving wheels (2, 3).

6. A method according to any one of the preceding claims, **characterized in that** the running direction of at least one driving wheel (2, 3) is detected to identify the driving wheel (2, 3) running slower at the moment, and/or **in that** a driving wheel (2, 3) is identified as a slow running driving wheel (2, 3) when the difference in amount of the speed actual values (G1, G2) of the driving wheels (2, 3) reaches or exceeds a specified threshold value, and/or **in that** the threshold value describes a relative difference of at least 5%, in particular maximum 10%, of the speed actual values (G1, G2), and/or **in that** a first condition for the speed actual values (G1, G2) of the driving wheels (2, 3) is stored, and **in that** the identification of a slower driving wheel is enabled or activated when the first condition is fulfilled, and/or **in that** a second condition for the speed actual values (G1, G2) of the driving wheels (2, 3) is stored, and **in that** a slower driving wheel is identified when the second condition is fulfilled.

7. A method according to any one of the preceding claims, **characterized in that** the torque limit value at the driving wheel (2, 3) identified as running slower at the moment is set to zero when the torque desired value at the other driving wheel (2, 3), in particular at the driving wheel (2, 3) identified as running faster at the moment, of the at least two driving wheels (2, 3) describes a brake torque, and/or **in that** a speed desired value (n_{desired}, 17) is specified for the driving wheels (2, 3) and **in that** for each driving wheel (2, 3) there is determined, preferably in a closed-loop system (13, 14), of a controller (9, 10), which closed-loop system is in particular associated with the individual driving wheel (2, 3), that torque desired value required to reach the predetermined speed desired value (n_{desired}, 17), and/or **in that** the same speed desired value (n_{desired}, 17) is specified for both driving wheels (2, 3), and/or **in that** the torque limit value for the driving wheel (2, 3) identified as running faster at the moment is set to a predetermined, constant maximum value (P1, P2), and/or **in that** the torque desired values for the driving wheels (2, 3) are determined independently of one another, and/or **in that** the torque limit value at the driving wheel (2, 3) identified as running slower at the moment is predetermined to differ from zero so long as the torque desired value at the driving wheel (2, 3) identified as running faster at the moment is greater than zero, and/or **in that** the torque limit value at the driving wheel (2, 3) identified as running slower at the moment is set in a manner coupled with the torque desired value at the driving wheel (2, 3) identified as running faster at the moment, and/or **in that** the torque desired value at the driving wheel (2, 3) identified as running faster at the moment is set or predetermined as torque limit value at the driving wheel (2, 3) identified as running slower at the moment.

8. A cornering control device (45) having at least two controllers (9, 10) preferably separate from one another, which in each case are set up to determine a torque desired value for a respective driving wheel (2, 3) of at least two driving wheels (2, 3), guided one behind the other on a common rail (4), of a railborne storage and retrieval machine, **characterized in that** there is a test device (30) with which a driving wheel (2, 3) of the at least two driving wheels (2, 3) is identifiable as a driving wheel (2, 3) running slower at the moment, **in that** associated with each controller (9, 10) there is a limiting device (24, 25) to set a variable and upwardly limited torque limit value for the determinable torque desired values, and **in that** the test device (30) is in a controlling connection with the limiting devices (24, 25) of the at least two driving wheels (2, 3) in such a manner that in each case the limiting device (24, 25) of the driving wheel (2, 3) identified by the test device (30) as running slower at the moment is activated.

9. A cornering control device (45) according to claim 8, **characterized in that** the limiting device (24, 25) activated in each case is set up in such a manner that a torque range between zero and the torque limit value is defined for the torque desired value by the set torque limit value, and/or **in that** the limiting device (24, 25) activated in each case is set up in such a manner that deviations of the torque desired value from the set torque limit value are permitted downwards, **in that** for setting of the torque limit value, the limiting device (24, 25) activated in each case is in a control connection with the controller (9, 10) of the other driving wheel (2, 3), and/or **in that** the controllers (9, 10) are in each case set up to determine the torque desired value for a speed desired value (n_{desired}, 17), and/or **in that** the controllers (9,10) can be operated independently of one another.

10. A cornering control device (45) according to one of claims 8 and 9, **characterized in that** the test device (30) is connected or connectable to measuring equipment (11, 12) to measure speed actual values of the at least two driving wheels (2, 3), and/or **in that** the test device (30) has a means for subtraction or a comparator (42) of speed actual values (G1, G2), and/or **in that** the test device (30) has a means for quotient formation of speed actual values (G1, G2).

11. A cornering control device (45) according to any one of claims 8 to 10, **characterized in that** the test device (30) has a threshold switch.

12. A cornering control device (45) according to any one of claims 8 to 11, **characterized in that** the test device (30) has a change-over switch (28, 29) or is attached to at least one change-over switch (28, 29), with which the limiting devices (24, 25) of the at least two driving wheels (2, 3) can be activated alternately, and/or **in that** a first condition for the speed actual values (G1, G2) of the driving wheels (2, 3) is stored, and **in that** the change-over switch (28, 29) is enabled or activated when the first condition is fulfilled, and/or **in that** a second condition for the speed actual values (G1, G2) of the driving wheels (2, 3) is stored, and **in that** the test device (30) is set up for actuation of the activated or enabled change-over switch (28, 29) when the second condition is fulfilled.

13. A cornering control device (45) according to any one of claims 8 to 12, **characterized in that** in each controller (9, 10) there is stored a function with which a torque limit value can be calculated for a torque intended value, preferably independently of the other controller (9, 10) in each case, and/or **in that** the or a function stored in the controller (9, 10) specifies a torque limit value of zero for braking torque desired values.

14. A railborne storage and retrieval machine having at least two driving wheels (2, 3) which are arranged one behind the other in the direction of travel for guiding on a common rail (4), wherein for each driving wheel (2, 3) there is set up a controller (9, 10) which forms a closed-loop device (13, 14) for determining a torque desired value for the respective driving wheel (2, 3), **characterized in that** a cornering control device (45) according to any one of claims 8 to 13 is formed.

15. A railborne storage and retrieval machine (1) according to claim 14, **characterized in that** a control of the controllers (9, 10) is set up in such a manner that pushing of the faster driving wheel (2, 3) by the slower driving wheel (2, 3) is avoided or avoidable.

## Revendications

1. Procédé de commande du mouvement longitudinal d'un transstockeur sur rail,
le transstockeur étant entraîné par au moins deux roues motrices (2, 3) guidées sur un rail commun (4) et espacées l'une de l'autre dans la direction de marche, une valeur de consigne de couple étant déterminée pour chacune desdites au moins deux roues motrices (2, 3),
**caractérisé en ce**
**qu'**une roue motrice (2, 3) desdites au moins deux roues motrices (2, 3) est détectée comme roue motrice (2, 3) tournant momentanément plus lentement et que pour la roue motrice (2, 3) détectée comme tournant momentanément plus lentement, une valeur limite de couple variable est réglée en plus,
laquelle limite vers le haut la valeur de consigne de couple déterminable pour cette roue motrice (2, 3).

2. Procédé selon la revendication 1,
**caractérisé en ce**
**qu'**au passage d'une courbe de rail (5, 6), lesdites au moins deux roues motrices (2, 3) sont commandées de façon à éviter un changement soudain de vitesse de rotation de la roue motrice (2, 3) tournant plus rapidement.

3. Procédé selon l'une des revendications précédentes,
**caractérisé en ce**
**que** la valeur limite de couple réglée définit une plage de couple pour la valeur de consigne de couple comprise entre zéro et la valeur limite de couple,
et/ou
**que** la valeur limite de couple réglée autorise des écarts de la valeur de consigne de couple vers le bas par rapport à la valeur limite de couple,
et/ou
**qu'**à la roue motrice (2, 3) détectée comme tournant momentanément plus rapidement est fixée la valeur de consigne de couple déterminée pour cette roue motrice (2, 3), et/ou
**qu'**à la roue motrice (2, 3) détectée comme tournant momentanément plus lentement est fixée la valeur de consigne de couple déterminée pour cette roue motrice (2, 3), lorsque cette valeur de consigne de couple est inférieure à la valeur limite de couple réglée,
et/ou
**qu'**à la roue motrice (2, 3) détectée comme tournant momentanément plus lentement est fixée la valeur de consigne de couple réglée pour cette roue motrice (2, 3),
lorsque la valeur de consigne de couple déterminée est supérieure à la valeur limite de couple.

4. Procédé selon l'une des revendications précédentes,
**caractérisé en ce**
**que** la valeur limite de couple pour la roue motrice (2, 3) détectée comme tournant momentanément plus lentement est réglée en fonction de la valeur de consigne de couple déterminée, en particulier égale à la valeur de consigne de couple déterminée de l'autre roue motrice (2, 3), en particulier de la roue motrice (2, 3) détectée comme tournant momentanément plus rapidement, desdites au moins deux roues motrices (2, 3),
et/ou
**que** pour chacune des deux roues motrices (2, 3), on détermine, de préférence indépendamment l'une de l'autre et/ou séparément, la valeur de consigne de couple qui est nécessaire pour atteindre une valeur de consigne de vitesse de rotation.

5. Procédé selon l'une des revendications précédentes,
**caractérisé en ce**
**que** pour détecter la roue motrice (2, 3) tournant momentanément plus lentement, on mesure pour chacune desdites au moins deux roues motrices (2, 3) une valeur réelle de vitesse de rotation (G1, G2)
et/ou
**que** pour déterminer la roue motrice (2, 3) détectée comme tournant momentanément plus lentement, on forme un quotient des valeurs réelles de vitesse de rotation (G1, G2) des roues motrices (2, 3).

6. Procédé selon l'une des revendications précédentes,
**caractérisé en ce**
**que** pour détecter la roue motrice (2, 3) tournant momentanément plus lentement, on capte le sens de rotation d'au moins une roue motrice (2, 3)
et/ou
**qu'**une roue motrice (2, 3) est détectée comme roue motrice (2, 3) tournant plus lentement lorsque la différence en valeur absolue des valeurs réelles de vitesse de rotation (G1, G2) des roues motrices (2, 3) atteint ou dépasse une valeur seuil fixée, et/ou
**que** la valeur seuil décrit une différence relative d'au moins 5 %, en particulier d'au plus 10 %, des valeurs réelles de vitesse de rotation (G1, G2)
et/ou
**qu'**une première condition pour les valeurs réelles de vitesse de rotation (G1, G2) des roues motrices (2, 3) est enregistrée, et que la détection d'une roue motrice plus lente est autorisée ou activée lorsque la première condition est remplie,
et/ou
**qu'**une deuxième condition pour les valeurs réelles de vitesse de rotation (G1, G2) des roues motrices (2, 3) est enregistrée, et qu'une roue motrice plus lente est détectée lorsque la deuxième condition est remplie.

7. Procédé selon l'une des revendications précédentes,
**caractérisé en ce**
**que** la valeur limite de couple est réglée à zéro sur la roue motrice (2, 3) détectée comme tournant momentanément plus lentement,
lorsque la valeur de consigne de couple sur l'autre roue motrice (2, 3), en particulier sur la roue motrice (2, 3) détectée comme tournant momentanément plus rapidement, desdites au moins deux roues motrices (2, 3) décrit un couple de freinage,
et/ou
**qu'**une valeur de consigne de vitesse de rotation (n₀ₙ, 17) est fixée aux roues motrices (2, 3) et que pour chaque roue motrice (2, 3), de préférence dans un circuit de régulation (13, 14) d'un dispositif de régulation (9, 10) associé en particulier à la roue motrice (2, 3) individuelle, on détermine la valeur de consigne de couple qui est nécessaire pour atteindre la valeur de consigne de vitesse de rotation (n_{Soll}, 17) fixée et/ou
**que** la même valeur de consigne de vitesse de rotation (n_{Soll}, 17) est fixée aux deux roues motrices (2, 3)
et/ou
**que** la valeur limite de couple pour la roue motrice (2, 3) détectée comme tournant momentanément plus rapidement est réglée à une valeur maximale constante fixée (P1, P2)
et/ou
**que** les valeurs de consigne de couple pour les roues motrices (2, 3) sont déterminées indépendamment l'une de l'autre
et/ou
**que** la valeur limite de couple à la roue motrice (2, 3) détectée comme tournant momentanément plus lentement est fixée à une valeur différente de zéro tant que la valeur de consigne de couple à la roue motrice (2, 3) détectée comme tournant momentanément plus rapidement est supérieure à zéro,
et/ou
**que** la valeur limite de couple à la roue motrice (2, 3) détectée comme tournant momentanément plus lentement est réglée de façon couplée à la valeur de consigne de couple à la roue motrice (2, 3) détectée comme tournant momentanément plus rapidement
et/ou
**que** la valeur de consigne de couple à la roue motrice (2, 3) détectée comme tournant momentanément plus rapidement est réglée ou fixée comme valeur limite de couple à la roue motrice (2, 3) détectée comme tournant momentanément plus lentement.

8. Dispositif de commande de circulation en courbe (45),
comprenant au moins deux dispositifs de régulation (9, 10) réalisés de préférence de manière séparée l'un de l'autre,
lesquels sont conçus chacun pour déterminer une valeur de consigne de couple pour une roue motrice (2, 3) d'au moins deux roues motrices (2, 3) guidées l'une derrière l'autre sur un rail commun (4) d'un transstockeur sur rail,
**caractérisé en ce**
**qu'**un dispositif de contrôle (30) est réalisé,
au moyen duquel une roue motrice (2, 3) desdites au moins deux roues motrices (2, 3) peut être détectée comme roue motrice (2, 3) tournant momentanément plus lentement, qu'à chaque dispositif de régulation (9, 10) est associé un dispositif de limitation (24, 25) pour régler une valeur limite de couple variable limitant vers le haut les valeurs de consigne de couple déterminables
et **que** le dispositif de contrôle (30) est en liaison de commande avec les dispositifs de limitation (24, 25) desdites au moins deux roues motrices (2, 3) de façon que le dispositif de limitation (24, 25) respectif de la roue motrice (2, 3) détectée comme tournant momentanément plus lentement soit activé par le dispositif de contrôle (30).

9. Dispositif de commande de circulation en courbe (45) selon la revendication 8, **caractérisé en ce**
**que** le dispositif de limitation (24, 25) respectif activé est conçu de façon que la valeur limite de couple définisse une plage de couple pour la valeur de consigne de couple comprise entre zéro et la valeur limite de couple,
et/ou
**que** le dispositif de limitation (24, 25) respectif activé est conçu de façon que des écarts de la valeur de consigne de couple vers le bas par rapport à la valeur limite de couple soient autorisés,
**que** le dispositif de limitation (24, 25) respectif activé est en liaison de commande avec le dispositif de régulation (9, 10) de l'autre roue motrice (2, 3) pour régler la valeur limite de couple
et/ou
**que** les dispositifs de régulation (9, 10) sont conçus pour déterminer la valeur de consigne de couple pour une valeur de consigne de vitesse de rotation (n_{Soll}, 17) et/ou
**que** les dispositifs de régulation (9, 10) peut fonctionner indépendamment l'un de l'autre.

10. Dispositif de commande de circulation en courbe (45) selon l'une des revendications 8 ou 9,
**caractérisé en ce**
**que** le dispositif de contrôle (30) est raccordé ou peut être raccordé à des moyens de mesure (11, 12) pour mesurer les valeurs réelles de vitesse de rotation desdites au moins deux roues motrices (2, 3)
et/ou
**que** le dispositif de contrôle (30) présente un moyen pour former une différence ou un comparateur (42) de valeurs réelles de vitesse de rotation (G1, G2) et/ou
**que** le dispositif de contrôle (30) présente un moyen pour former un quotient de valeurs réelles de vitesse de rotation (G1, G2).

11. Dispositif de commande de circulation en courbe (45) selon l'une des revendications 8 à 10,
**caractérisé en ce**
**que** le dispositif de contrôle (30) présente un commutateur à valeur seuil.

12. Dispositif de commande de circulation en courbe (45) selon l'une des revendications 8 à 11,
**caractérisé en ce**
**que** le dispositif de contrôle (30) présente un commutateur (28, 29) ou est raccordé à au moins un commutateur (28, 29) avec lequel les dispositifs de limitation (24, 25) desdites au moins deux roues motrices (2, 3) peuvent être activés alternativement,
et/ou
**qu'**une première condition pour les valeurs réelles de vitesse de rotation (G1, G2) des roues motrices (2, 3) est enregistrée, et que le commutateur (28, 29) est autorisé ou activé lorsque la première condition est remplie,
et/ou
**qu'**une deuxième condition pour les valeurs réelles de vitesse de rotation (G1, G2) des roues motrices (2, 3) est enregistrée, et que le dispositif de contrôle (30) est conçu pour actionner le commutateur (28, 29) activé ou autorisé lorsque la deuxième condition est remplie.

13. Dispositif de commande de circulation en courbe (45) selon l'une des revendications 8 à 12,
**caractérisé en ce**
**que** dans chaque dispositif de régulation (9, 10) est enregistrée une fonction avec laquelle une valeur limite de couple peut être calculée pour une valeur de consigne de couple, de préférence indépendamment de l'autre dispositif de régulation (9, 10) respectif,
et/ou
**que** la ou une fonction enregistrée dans le dispositif de régulation (9, 10) fixe une valeur limite de couple nulle pour les valeurs de consigne de couple de freinage.

14. Transstockeur sur rail,
doté d'au moins deux roues motrices (2, 3),
lesquelles sont disposées l'une derrière l'autre dans la direction de marche pour le guidage sur un rail commun (4),
un dispositif de régulation (9, 10) étant prévu pour chaque roue motrice (2, 3),
lequel forme un circuit de régulation (13, 14) pour déterminer une valeur de consigne de couple pour la roue motrice (2, 3) respective,
**caractérisé en ce**
**qu'**un dispositif de commande de circulation en courbe (45) selon l'une des revendications 8 à 13 est réalisé.

15. Transstockeur sur rail (1) selon la revendication 14,
**caractérisé en ce**
**qu'**une commande des dispositifs de régulation (9, 10) est conçue de façon qu'une poussée de la roue motrice (2, 3) plus rapide par la roue motrice (2, 3) plus lente soit évitée ou évitable.
